(19) Europäisches Patentamt
European Patent Office
Office européen des brevets

(11) **EP 2 505 247 B1**

(12) **EUROPEAN PATENT SPECIFICATION**

(45) Date of publication and mention
of the grant of the patent:
**27.11.2013 Bulletin 2013/48**

(51) Int Cl.:
***B01D 46/24*** *(2006.01)*

(21) Application number: **11181027.1**

(22) Date of filing: **13.09.2011**

(54) **Honeycomb structured body**

Wabenstrukturkörper

Corps structuré en nid d'abeille

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2011 PCT/JP2011/058334**

(43) Date of publication of application:
**03.10.2012 Bulletin 2012/40**

(73) Proprietor: **Ibiden Co., Ltd.
Ogaki-shi, Gifu 503-8604 (JP)**

(72) Inventors:
• **Ishikawa, Shigeharu
Gifu, 501-0695 (JP)**

• **Goto, Shigeaki
Gifu, 501-0695 (JP)**
• **Ogasawara, Toyoki
Gifu, 501-0695 (JP)**

(74) Representative: **HOFFMANN EITLE
Patent- und Rechtsanwälte
Arabellastrasse 4
81925 München (DE)**

(56) References cited:
**EP-A1- 1 484 483      EP-A1- 1 618 941
US-A1- 2005 235 622**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a honeycomb structured body.

BACKGROUND ART

In recent years, particulates (hereinafter, also referred to as "PM") such as soot and other toxic components contained in exhaust gases discharged from internal combustion engines of vehicles such as buses and trucks, construction machines, or the like have raised serious problems as contaminants harmful to the environment and the human body.

For this reason, various honeycomb structured bodies made of porous ceramics have been proposed as honeycomb filters to purify the exhaust gases.
Conventionally-known honeycomb structured bodies as above described include a honeycomb structured body having a ceramic block including a combination of multiple honeycomb fired bodies in each of which a large number of cells are longitudinally disposed in parallel with one another with a cell wall interposed therebetween.

In a honeycomb structured body used for purifying exhaust gases, a rapid temperature change of exhaust gases or local heating are likely to cause an uneven temperature distribution in the honeycomb structured body. As a result, thermal stress problematically causes cracks.
Particularly in the case where the honeycomb structured body is employed for collecting PM in exhaust gases, the honeycomb structured body needs to be regenerated in order to burn and remove the collected PM. Since a large thermal stress tends to be generated with burning of PM upon the regeneration, cracks problematically tend to occur.

Patent Document 1 discloses a honeycomb structured body including honeycomb fired bodies in which a heat capacity per unit volume in a peripheral part of the honeycomb fired body is larger than a heat capacity per unit volume in a central part of the honeycomb fired body in order to improve resistance to cracks caused by a thermal stress. Specifically, Patent Document 1 discloses a honeycomb structured body including honeycomb fired bodies in each of which the average thickness of the cell walls in the peripheral part is larger than the average thickness of the cell walls in the central part.

Patent Document 2 discloses a honeycomb filter including a number of through-holes surrounded by partition walls and extending through an axial direction, wherein a heat capacity of the central part of the honeycomb filter is set to be larger than that of a peripheral part in a section of the honeycomb filter perpendicular to the axial direction.
Further, patent document 3 teaches a ceramic honeycomb wall flow filter comprising an array of parallel channels separated by porous channel walls running parallel with a central filter axis in a gas flow direction. The channel walls of an axial group of inlet and outlet channels disposed along the central filter axis have at least a higher heat capacity and/or a higher gas flow resistance than the channel walls of a peripheral group of inlet and outlet channels disposed peripherally of the first group of channels.
Patent Document 4 is directed to a honeycomb structure comprising a segment part including a plurality of first honeycomb segments bonded together by a bonding material and a plurality of second honeycomb segments arranged in the periphery of the segment part in a cross-section perpendicular to the axis, wherein a cross-sectional area of the first honeycomb segments is smaller than the cross-sectional area of the second honeycomb segments in the cross-section perpendicular to the axis.

Patent Document 1:    JP-A 2003-10616
Patent Document 2:    EP 1 484 483 A1
Patent Document 3:    US 2005/0235622 A1
Patent Document 4:    EP 1 618 941 A1

SUMMARY OF THE INVENTION

PROBLEMS TO BE SOLVED BY THE INVENTION

In the conventional honeycomb structured body described in Patent Document 1, cell walls in a peripheral part of a honeycomb fired body are thicker than cell walls in a central part of the honeycomb fired body, leading to high resistance to external stress.
Thus, a honeycomb structured body that tends not to have cracks in the case where regenerating treatment and the like cause the honeycomb structured body to have a high temperature is required.

The present invention has been made to solve the above problems. It is an object of the present invention to provide a honeycomb structured body that tends not to generate cracks in the case where the honeycomb structured body has a high temperature.

In order to achieve the above object, a honeycomb structured body according to claim 1 includes: a ceramic block in which multiple honeycomb fired bodies are combined with one another by interposing an adhesive layer, the honeycomb fired bodies having a peripheral wall therearound and having a large number of cells longitudinally disposed in parallel with one another with a cell wall therebetween, wherein at least one of the multiple honeycomb fired bodies is a center-high-heat-capacity honeycomb fired body in which a heat capacity per unit volume in a central part of the honeycomb fired body is larger than a heat capacity per unit volume in a peripheral part of the honeycomb fired body and the thickness of the peripheral wall is the same as or larger than the thickness of the thickest cell wall.

The honeycomb structured body according to claim 1 includes a center-high-heat-capacity honeycomb fired body in which the heat capacity per unit volume in the central part of the honeycomb fired body is larger than the heat capacity per unit volume in the peripheral part of the honeycomb fired body.

Therefore, in the case where the honeycomb structured body has a high temperature, temperature tends not to increase in the central part of the center-high-heat-capacity honeycomb fired body. In contrast, temperature tends to increase in the peripheral part of the center-high-heat-capacity honeycomb fired body. However, heat can be emitted around the high-heat-capacity honeycomb fired body (to an adhesive layer, or to a peripheral coat layer in the case where the peripheral coat layer is formed). Accordingly, since the temperature difference in between  the central part and the peripheral part of the center-high-heat-capacity honeycomb fired body can be suppressed, cracks resulting from the temperature difference can be prevented. Consequently, cracks tend not to occur in the honeycomb structured body.

In the present description, the expression "a cell wall in the honeycomb fired body" refers to a portion that is present between adjacent two cells to separate the two cells. The expression "a peripheral wall in the honeycomb fired body" refers to a portion that is present around the honeycomb fired body and forms the periphery of the honeycomb fired body.

The expression "a central part of the honeycomb fired body" used herein refers to a part in which a cross section perpendicular to a longitudinal direction of the honeycomb fired body includes the center of the cross section of the honeycomb fired body, and which is surrounded by a similar figure to the periphery of the cross section of the honeycomb fired body and accounts for 50% of the cross section of the honeycomb fired body. The expression "a peripheral part of the honeycomb fired body" used herein refers to a part that is located outside the central part of the honeycomb fired body and is other than the central part and the peripheral wall in the honeycomb fired body.

In addition, the expression "a heat capacity per unit volume" used herein refers to a heat capacity based on the volume containing cells.

In the honeycomb structured body according to claim 2, an average thickness of the cell walls in the central part of the center-high-heat-capacity honeycomb fired body is larger than an average thickness of the cell walls in the peripheral part of the center-high-heat-capacity honeycomb fired body.

When the average thickness of the cell walls in the central part of the center-high-heat-capacity honeycomb fired body is larger than the average thickness of the cell walls in the peripheral part of the center-high-heat-capacity honeycomb fired body, the heat capacity per unit volume in the central part of the center-high-heat-capacity honeycomb fired body can be larger than the heat capacity per unit volume in the peripheral part of the center-high-heat-capacity honeycomb fired body.

Accordingly, since the temperature difference in between the central part and the peripheral part of the center-high-heat-capacity honeycomb fired body can be suppressed, cracks resulting from the temperature difference can be prevented.

The case where the honeycomb structured body according to claim 2 is used for collecting PM in exhaust gases is desirable in terms of the following points.

Pressure loss is comparatively small in portions in which cell walls of the honeycomb fired body are thin. In the honeycomb structured body according to claim 2, since the average thickness of the cell walls in the peripheral part of the center-high-heat-capacity honeycomb fired body is smaller than the average thickness of the cell walls in the central part of the center-high-heat-capacity honeycomb fired body, exhaust gases are more likely allowed to flow into the peripheral part of the center-high-heat-capacity honeycomb fired body. As a result, PM is more likely to be deposited in the peripheral part than in the central part of the center-high-heat-capacity honeycomb fired body.

Therefore, in the case where the honeycomb structured body according to claim 2 is used for collecting PM in exhaust gases, heating in the central part of the center-high-heat-capacity honeycomb fired body can be comparatively small upon burning PM during the regenerating  treatment. In contrast, in the peripheral part of the center-high-heat-capacity honeycomb fired body, since the amount of deposited PM is large, the heat quantity is comparatively large. Further, since the heat capacity is small, the temperature in the peripheral part of the center-high-heat-capacity honeycomb fired body tends to increase. However, in the peripheral part of the center-high-heat-capacity honeycomb fired body, heat can be emitted around the center-high-heat-capacity honeycomb fired body (to an adhesive layer, or to a peripheral coat layer in the case where the peripheral coat layer is formed). Accordingly, since the temperature difference in between the central part and the peripheral part of the center-high-heat-capacity honeycomb fired body can be more reduced, cracks can be prevented.

In the honeycomb structured body according to claim 3, the average thickness of the cell walls in the central part of the center-high-heat-capacity honeycomb fired body is 0.10 to 0.20 mm, and the average thickness of the cell walls in the peripheral part of the center-high-heat-capacity honeycomb fired body is 90 to 98% of the average thickness of the cell walls in the central part of the center-high-heat-capacity honeycomb fired body.

If the average thickness of the cell walls in the central part of the center-high-heat-capacity honeycomb fired body is less than 0.10 mm, the heat capacity per unit volume in the central part of the center-high-heat-capacity honeycomb fired body is too small. Therefore, it is difficult to prevent a temperature rise in the central part of the center-high-heat-capacity honeycomb fired body. As a result, if the honeycomb structured body has a high temperature, cracks are more likely to occur in the honeycomb structured body. If the average thickness of the cell walls in the central part of the center-high-heat-capacity honeycomb fired body is less than 0.10 mm, the average thickness of the cell walls in the peripheral part of the center-high-heat-capacity honeycomb fired body is less than 0.10 mm. Therefore, the strength of the honeycomb fired body is less likely to be secured.

In contrast, if the average thickness of the cell walls in the central part of the center-high-heat-capacity honeycomb fired body is more than 0.20 nm, the heat capacity per unit volume in the central part of the center-high-heat-capacity honeycomb fired body is large. Therefore, the effect of preventing a temperature rise in the central part of the center-high-heat-capacity honeycomb fired body is improved. However, when the cell wall is too thick, the filtration pressure of exhaust gases passing through the cell wall rises, resulting in an increase in pressure loss, another required performance as the honeycomb structured body.

If the average thickness of the cell walls in the peripheral part of the center-high-heat-capacity honeycomb fired body is less than 90% of the average thickness of the cell walls in the central part of the center-high-heat-capacity honeycomb fired body, the strength of the honeycomb fired body is less likely to be secured.

In contrast, if the average thickness of the cell walls in the peripheral part of the center-high-heat-capacity honeycomb fired body is more than 98% of the average thickness of the cell walls in the central part of the center-high-heat-capacity honeycomb fired body, the difference in the average thickness of the cell walls in between the central part and the peripheral part of the center-high-heat-capacity honeycomb fired body is small. Accordingly, since the difference in heat capacity per unit volume in between the central part and the peripheral part of the center-high-heat-capacity honeycomb fired body is small, the effect of reducing the temperature difference in between the central part and the peripheral part of the center-high-heat-capacity honeycomb fired body is less likely to be obtained.

In the honeycomb structured body according to claim 4, the thickness of the cell wall gradually decreases from the central part to the peripheral part of the center-high-heat-capacity honeycomb fired body.

In the honeycomb structured body according to claim 5, the thickness of the cell wall continuously decreases from the central part to the peripheral part of the center-high-heat-capacity honeycomb fired body.

In the honeycomb structured body according to claim 4 or 5, it is possible to gradually or continuously decrease the heat capacity per unit volume in the center-high-heat-capacity honeycomb fired body from the central part to the peripheral part of the center-high-heat-capacity honeycomb fired body. Therefore, heat can be transferred smoothly from the central part to the peripheral part of the center-high-heat-capacity honeycomb fired body. Then, heat can be emitted around the center-high-heat-capacity honeycomb fired body (to an adhesive layer, or to a peripheral coat layer in the case where the peripheral coat layer is formed). As a result, since the temperature difference in between the central part and the peripheral part of the center-high-heat-capacity honeycomb fired body can be more reduced, cracks can be prevented. The expression "the thickness of the cell wall gradually decreases" used herein means that when the relationship between the thickness of the cell wall and the length thereof perpendicular to the thickness direction is plotted, the thickness of the cell wall discontinuously decreases stepwise (two or more steps). The expression "the thickness of the cell wall continuously decreases" used herein means that when the relationship between the thickness of the cell wall and the length thereof perpendicular to the thickness direction is plotted, the thickness of the cell wall decreases in a curved or straight manner.

In the honeycomb structured body according to claim 6, cell walls located in the outermost part of the center-high-heat-capacity honeycomb fired body are thinner than cell walls other than the cell walls located in the outermost part of the center-high-heat-capacity honeycomb fired body.

In the honeycomb structured body according to claim 6, the heat capacity per unit volume in the outermost part of the center-high-heat-capacity honeycomb fired body can be smaller than the heat capacity per unit volume in a part other than the outermost part. Therefore, the temperature in the outermost part of the center-high-heat-capacity honeycomb fired body tends to rise. Since the temperature difference in between the central part and the peripheral part of the center-high-heat-capacity honeycomb fired body can be more reduced even in the honeycomb structured body including the center-high-heat-capacity honeycomb fired bodies having such a configuration, cracks can be prevented.

In the honeycomb structured body according to claim 7, the thickness of the peripheral wall is 0.20 to 0.50 mm in each of the multiple honeycomb fired bodies.

If the thickness of the peripheral wall is less than 0.20 mm, the strength of the honeycomb fired body is less likely to be secured.

If the thickness of the peripheral wall is more than 0.50 mm, the weight of the entire honeycomb structured body increases though the weight reduction is desired.

In the honeycomb structured body according to claim 8,  in each of the multiple honeycomb fired bodies, the large number of cells include large volume cells and small volume cells, and each of the large volume cells is larger than each of the small volume cells in a cross section perpendicular to the longitudinal direction.

In the honeycomb structured body according to claim 9, each of the large volume cells has an octagonal shape in a cross section perpendicular to the longitudinal direction, and each of the small volume cells has a quadrangle shape in a cross section perpendicular to the longitudinal direction.

In the honeycomb structured body according to claim 10, each of the large volume cells has a quadrangle shape in a cross section perpendicular to the longitudinal direction, and each of the small volume cells has a quadrangle shape in a cross section perpendicular to the longitudinal direction.

In the honeycomb structured body according to claim 11, a cell wall to define each of the large volume cells and the small volume cells has a shape formed by a curve line in a cross section perpendicular to the longitudinal direction.

In the case where the honeycomb structured body according to any one of claims 8 to 11 is used for collecting PM in exhaust gases, a large amount of PM can be collected in the large volume cells. Therefore, the temperature of the honeycomb fired bodies tends to rise upon burning PM during the regenerating treatment. However, in the honeycomb structured body according to any one of claims 8 to 11, since the temperature difference in between the central part and the peripheral part of the center-high-heat-capacity honeycomb fired body can be reduced, cracks can be prevented.

In the honeycomb structured body according to any one of claims 9 to 11, the symmetry between a large volume cell in a cross section and a small volume cell in a cross section can be improved, likely resulting in improvement in isostatic strength and compressive strength of the honeycomb fired body. Therefore, when the honeycomb structured body has a high temperature, cracks can be prevented in the honeycomb structured body also in terms of the strength.

In the case where the honeycomb structured body according to any one of claims 9 to 11 is used for collecting PM in exhaust gases, the symmetry between a large volume cell and a small volume cell is improved, whereby exhaust gases are allowed to flow into the large volume cells in a balanced manner.

In the honeycomb structured body according to claim 12, the ratio of the area of each of the large volume cells in a cross section perpendicular to the longitudinal direction to the area of each of the small volume cells in a cross section perpendicular to the longitudinal direction is 1.4 to 2.8.

If the area ratio is less than 1.4, the difference between the area of each of the large volume cells in a cross section and the area of each of the small volume cells in a cross section is small, and therefore the effect of providing the large volume cells and small volume cells is less likely to be exerted. In contrast, if the area ratio is more than 2.8, the rate of cell walls separating large volume cells is high. As a result, in the case where the honeycomb structured body according to claim 12 is used for collecting PM in exhaust gases, exhaust gases are less likely to pass through the cell walls separating large volume cells, resulting in an increase in pressure loss, another required performance as the honeycomb structured  body.

In the honeycomb structured body according to claim 13, all of the honeycomb fired bodies not located in the periphery of the ceramic block are the center-high-heat-capacity honeycomb fired bodies.

In the honeycomb structured body according to claim 13, in the case where exhaust gases flow into the honeycomb structured body, and thereby the central part of the honeycomb structured body has a high temperature, the temperature difference in between the central part and the peripheral part of the center-high-heat-capacity honeycomb fired body can be reduced because all of the honeycomb fired bodies located in the central part of the honeycomb structured body are center-high-heat-capacity honeycomb fired bodies. Therefore, cracks can be prevented in the honeycomb structured body.

In the honeycomb structured body according to claim 14, all of the multiple honeycomb fired bodies are the center-high-heat-capacity honeycomb fired bodies.

In the honeycomb structured body according to claim 14, all of the honeycomb fired bodies in the honeycomb structured body are the center-high-heat-capacity honeycomb fired bodies, the temperature difference in between the central part and the peripheral part of the center-high-heat-capacity honeycomb fired bodies can be reduced. Therefore, temperature can be uniform in the entire honeycomb structured body. Accordingly, cracks can be more prevented in the honeycomb structured body.

In the honeycomb structured body according to claim 15, the large number of cells are alternately sealed at either end portions in each of the multiple honeycomb fired bodies.

The honeycomb structured body according to claim 15 can be suitably used as a filter for collecting PM in exhaust gases.

BRIEF DESCRIPTION OF THE DRAWINGS

Fig. 1(a) is a perspective view schematically illustrating one example of a honeycomb structured body of a first embodiment of the present invention. Fig. 1(b) is an A-A line cross-sectional view of the honeycomb structured body illustrated in Fig. 1(a).

Fig. 2(a) is a perspective view schematically illustrating one example of an inner honeycomb fired body in the honeycomb structured body of the first embodiment of the present invention. Fig. 2(b) is a B-B line cross-sectional view of the inner honeycomb fired body illustrated in Fig. 2(a).

Fig. 3 is a cross-sectional view schematically illustrating a central part and a peripheral part of a honeycomb fired body in the honeycomb structured body of one embodiment of the present invention.

Fig. 4 is a side view of the inner honeycomb fired body illustrated in Figs. 2(a) and 2(b).

Figs. 5(a) and 5(b) are side views each schematically illustrating one example of an outer honeycomb fired body in the honeycomb structured body of the first embodiment of the present invention.

Fig. 6(a) is a side view schematically illustrating, from one end face side, one example of an inner honeycomb fired body in a honeycomb structured body of a second embodiment of the present invention. Fig. 6(b) is a side view schematically illustrating, from the other end face side, the inner honeycomb fired body illustrated in Fig. 6(a).

Fig. 7 is a side view schematically illustrating another example of an inner honeycomb fired body in the honeycomb structured body of the second embodiment of the present invention.

Fig. 8 is a side view schematically illustrating another example of an inner honeycomb fired body in the honeycomb structured body of the second embodiment of the present invention.

Fig. 9 is a side view schematically illustrating one example of an inner honeycomb fired body in a honeycomb structured body of a third embodiment of the present invention.

Figs. 10(a) and 10(b) are side views each schematically illustrating another example of an inner honeycomb fired body in the honeycomb structured body of the third embodiment of the present invention.

Fig. 11 is a side view schematically illustrating one example of an inner honeycomb fired body in a honeycomb structured body of a fourth embodiment of the present invention.

Fig. 12 is a side view schematically illustrating another example of an inner honeycomb fired body in the honeycomb structured body of the fourth embodiment of the present invention.

Fig. 13 is a schematic view for explaining a method of measuring the thickness of a cell wall in a honeycomb fired body in each of the examples and comparative examples.

Figs. 14(a) and 14(b) are side views each schematically illustrating one example of an outer honeycomb fired body in a honeycomb structured body of another embodiment of the present invention.

Fig. 15(a) is a side view schematically illustrating another example of an inner honeycomb fired body in the honeycomb structured body of the first embodiment of the present invention. Fig. 15(b) is a side view schematically illustrating another example of an inner honeycomb fired body in the honeycomb structured body of the second embodiment of the present invention.

Figs. 16(a) and 16(b) are side views each schematically illustrating one example of an inner honeycomb fired body in a honeycomb structured body of another embodiment of the present invention.

Fig. 17 is a perspective view schematically illustrating one example of a honeycomb structured body of another embodiment of the present invention.

MODE FOR CARRYING OUT THE INVENTION

In a conventional honeycomb structured body described in Patent Document 1, in the case where the honeycomb structured body has a high temperature, cracks still problematically occur in the honeycomb structured body. Particularly in the case where the conventional honeycomb structured body described in Patent Document 1 is used for collecting PM in exhaust gases, it is considered that cracks problematically occur in the honeycomb structured body even when the amount of collected PM in the honeycomb structured body is small upon burning PM during the regenerating treatment.

The present inventors examined the reason why cracks occur in the conventional honeycomb structured body described in Patent Document 1. As a result, in the conventional honeycomb structured body described in Patent Document 1, it is proved that a temperature difference tends to arise between the central part and the peripheral part of a honeycomb fired body in the honeycomb structured body, and this temperature difference causes the honeycomb structured body to have cracks.

In the conventional honeycomb structured body described in Patent Document 1, the heat capacity per unit volume in the central part of the honeycomb fired body is smaller than the heat capacity per unit volume in the peripheral part of the honeycomb fired body. Accordingly, in the case where the honeycomb structured body has a high temperature, the temperature in the central part of the honeycomb fired body rises immediately while the temperature in the peripheral part of the honeycomb fired body tends not to rise. Therefore, a temperature difference presumably arises between the central part and the peripheral part of the honeycomb fired body.

Particularly in the case where the conventional honeycomb structured body described in Patent Document 1 is used for collecting PM in exhaust gases, it is proved that more PM tends to be deposited in the central part of the honeycomb fired body than in the peripheral part thereof upon burning PM during the regenerating treatment. Therefore, PM combustion upon regenerating treatment presumably provides more heat amount in the central part of the honeycomb fired body than in the peripheral part thereof. Thus, in the case where the conventional honeycomb structured body described in Patent Document 1 is used for collecting PM in exhaust gases, since the temperature rises more in the central part of the honeycomb fired body than in the peripheral part thereof, the temperature difference in between the central part and the peripheral part of the honeycomb fired body presumably increases more.

Hereafter, embodiments of the present invention will be specifically described. However, the present invention is not limited to the following embodiments, and the embodiments may be appropriately changed and applied to the present invention as long as the gist of the present invention are not changed.

(First embodiment)

Hereinafter, a first embodiment that is one embodiment of the honeycomb structured body of the present invention will be described with reference to drawings.
The honeycomb structured body according to the first embodiment of the present invention includes: a ceramic block in which multiple honeycomb fired bodies are combined with one another by interposing an adhesive layer, the honeycomb fired bodies having a peripheral wall therearound and having a large number of cells longitudinally disposed in parallel with one another with a cell wall therebetween, wherein at least one of the multiple honeycomb fired bodies is a center-high-heat-capacity honeycomb fired body in which a heat capacity per unit volume in a central part of the honeycomb fired body is larger than a heat capacity per unit volume in a peripheral part of the honeycomb fired body.
In the honeycomb structured body according to the first embodiment of the present invention, all of the honeycomb fired bodies not located in the periphery of the ceramic block are the center-high-heat-capacity honeycomb fired bodies.

Hereinafter, a honeycomb fired body located in the periphery of the ceramic block is referred to as "an outer honeycomb fired body", and a honeycomb fired body located inward of the outer honeycomb fired body is referred to as "an inner honeycomb fired body". Both the outer honeycomb fired body and the inner honeycomb fired body are simply referred to as the honeycomb fired body in the case that it is not necessary to distinguish them from each other.
In the present description, simple phrases of a cross section of the honeycomb structured body, a cross section of the honeycomb fired body, and a cross section of the honeycomb molded body refer to a cross section  perpendicular to the longitudinal direction of the honeycomb structured body, a cross section perpendicular to the longitudinal direction of the honeycomb fired body, and a cross section perpendicular to the longitudinal direction of the honeycomb molded body. Further, a simple phrase of the cross-sectional area of the honeycomb fired body refers to the area of the cross section perpendicular to the longitudinal direction of the honeycomb fired body.

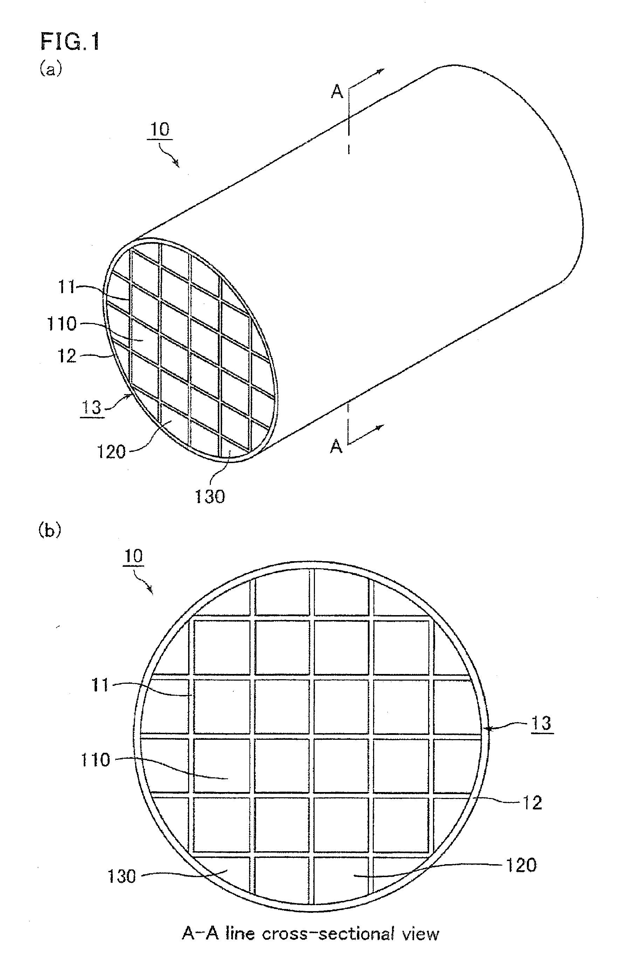

Fig. 1(a) is a perspective view schematically illustrating one example of a honeycomb structured body of a first embodiment of the present invention. Fig. 1(b) is an A-A line cross-sectional view of the honeycomb structured body illustrated in Fig. 1(a).
In a honeycomb structured body 10 illustrated in Figs. 1(a) and 1(b), multiple honeycomb fired bodies 110, 120, and 130 are bound with adhesive layers 11 interposed therebetween to form a ceramic block 13. Additionally, the ceramic block 13 has a peripheral coat layer 12 formed on its periphery. Here, the peripheral coat layer may be formed according to need.
The honeycomb fired bodies 110, 120, and 130 in the honeycomb structured body 10, which will be described later, are preferably porous bodies including silicon carbide or silicon-bonded silicon carbide.

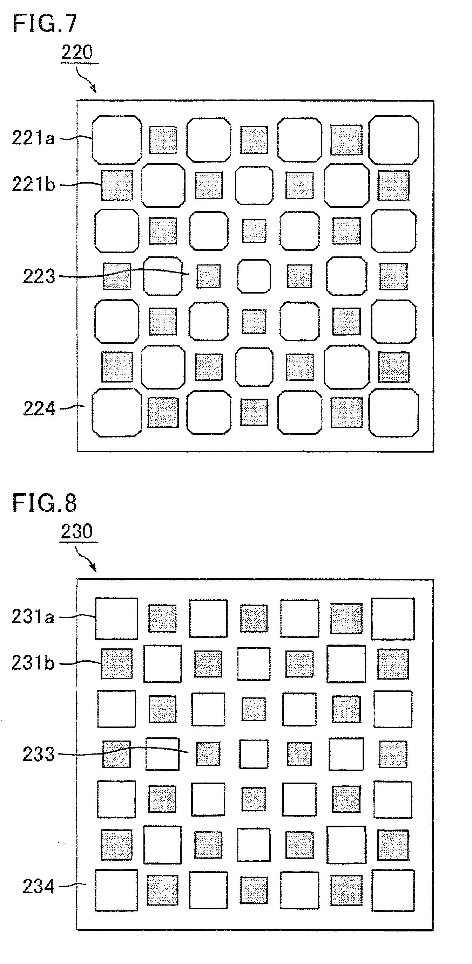

In the honeycomb structured body 10 illustrated in Figs. 1(a) and 1(b), 8 pieces of outer honeycomb fired bodies 120 and 8 pieces of outer honeycomb fired bodies 130 are positioned to form the periphery of the ceramic block 13 and 16 pieces of inner honeycomb fired bodies 110 are positioned inward of the honeycomb fired bodies 120 and 130. A total of the 32 pieces of the honeycomb fired bodies are bound to one another with the adhesive layers 11 interposed therebetween in a manner such that the ceramic block 103  (the honeycomb structured body 10) forms a circular cross-sectional shape.

As illustrated in Fig. 1(b), the cross-sectional shape of the inner honeycomb fired body 110 is a quadrangle (square).
Also, as illustrated in Fig. 1(b) the cross-sectional shape of the outer honeycomb fired body 120 is a shape surrounded by three line segments and one arc. Both of the two angles formed by two line segments out of the three line segments are 90°.
Further, as illustrated in Fig. 1(b), the cross-sectional shape of the outer honeycomb fired body 130 is a shape surrounded by two line segments and one arc. The angle formed by the two line segments is 90°.

Hereinafter, honeycomb fired bodies (inner honeycomb fired bodies and outer honeycomb fired bodies) in the honeycomb structured body according to the first embodiment of the present invention will be described with reference to drawings.

First, the inner honeycomb fired body in the honeycomb structured body according to the first embodiment of the present invention will be described.

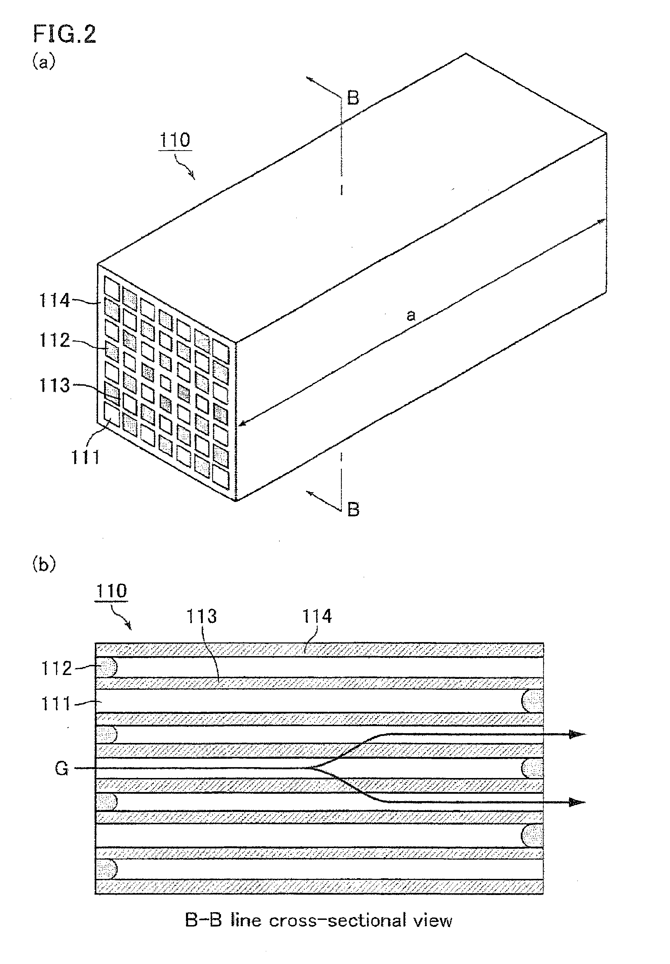

Fig. 2(a) is a perspective view schematically illustrating one example of an inner honeycomb fired body in the honeycomb structured body of the first embodiment of the present invention. Fig. 2(b) is a B-B line cross-sectional view of the inner honeycomb fired body illustrated in Fig. 2(a).

An inner honeycomb fired body 110 illustrated in Figs. 2(a) and 2(b) has a large number of cells 111 disposed in parallel with one another in a longitudinal direction (direction of arrow "a" in Fig, 2(a)) with a cell wall 113 therebetween, and a peripheral wall 114 is formed around the inner honeycomb fired body 110. In addition, either one end portion of each of the cells 111 is sealed with a plug material 112.

Therefore, exhaust gases G (exhaust gases are indicated by "G" and the flow of the exhaust gases are indicated by arrows in Fig. 2(b)) which have flowed into one of the cells 111 with an opening on one end face surely pass through the cell wall 113 separating the cells 111, and flow out from another cell 111 with an opening on the other end face. When the exhaust gases G pass through the cell wall 113, the cell wall 113 captures PM and the like in the exhaust gases. Thus, the cell wall 113 functions as a filter.

In the honeycomb structured body according to the first embodiment of the present invention, all of the honeycomb fired bodies not located in the periphery of the ceramic block (that is, the inner honeycomb fired bodies) are center-high-heat-capacity honeycomb fired bodies in each of which the heat capacity per unit volume in the central part of the honeycomb fired body is larger than the heat capacity per unit volume in the peripheral part of the honeycomb fired body.

Hereinafter, the central part and the peripheral part of the honeycomb fired body will be described..

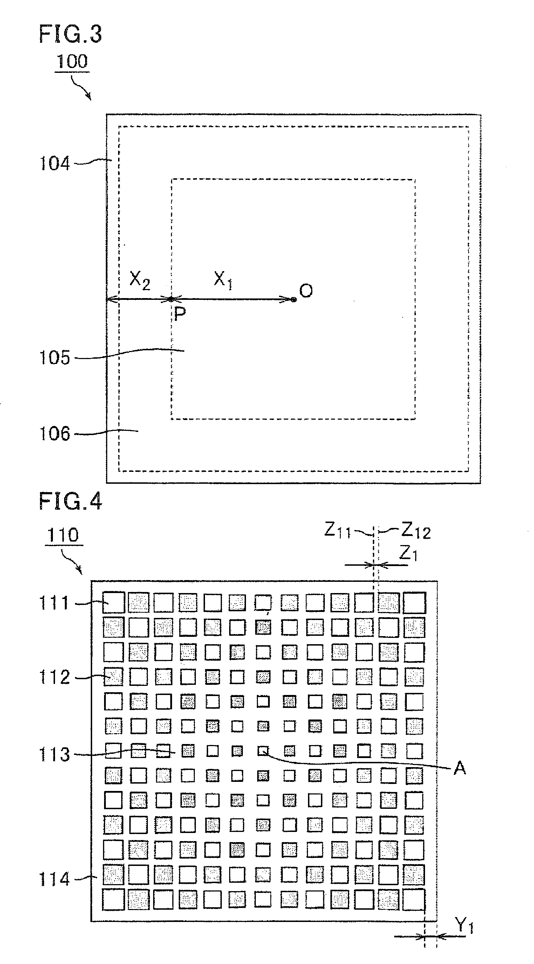

Fig. 3 is a cross-sectional view schematically illustrating the central part and the peripheral part of the honeycomb fired body in the honeycomb structured body of one embodiment of the present invention. In Fig. 3, cells and cell walls are omitted for convenience. Two dashed lines are illustrated in Fig. 3; the inner dashed line represents a boundary between the central part and the peripheral part of the honeycomb fired body, and the outer dashed line represents a boundary between the peripheral part and the peripheral wall of the honeycomb fired body.

As described above, the expression "a central part of the honeycomb fired body" used herein refers to a part, in which a cross section perpendicular to the longitudinal direction of the honeycomb fired body includes the center of the cross section of the honeycomb fired body, and which is surrounded by a similar figure to the periphery of the cross section of the honeycomb fired body and accounts for 50% of the cross section of the honeycomb fired body. In contrast, the expression "a peripheral part of the honeycomb fired body used herein refers to a part that is located outside the central part of the honeycomb fired body, and is other than the central part and the peripheral wall in the honeycomb fired body. With reference to Fig. 3, a central part 105 of a honeycomb fired body 100 refers to a part in which a cross section perpendicular to a longitudinal direction of the honeycomb fired body 100 includes a center of the cross section of the honeycomb fired body 100 (in Fig. 3, "O" represents the center of the cross section of the honeycomb fired body), a part surrounded by a line made by connecting points which internally divides the line segment connecting the center "O" and the periphery in a ratio of 1: $(2^{1/2}-1)$, that is, points that satisfy the equation $X_1 : X_2 = 1 : (2^{1/2}-1)$ (in Fig. 3, "P" represents the internally dividing point). In contrast, in Fig. 3, a peripheral part 106 of the honeycomb fired body 100 refers to a part located outside the central part 105 of the honeycomb fired body 100, and is other than the central part 105 and a peripheral wall 104 of the honeycomb fired body 100.

Here, Fig. 3 describes the case where the honeycomb fired body has a quadrangle (square) cross-sectional shape. The central part and the peripheral part of the honeycomb fired body are determined by the above relationship irrespective of the cross-sectional shape of the honeycomb fired body.

In the honeycomb structured body according to the first embodiment of the present invention, in order to make the heat capacity per unit volume in the central part of the center-high-heat-capacity honeycomb fired body larger than the heat capacity per unit volume in the peripheral part of the center-high-heat-capacity honeycomb fired body, the average thickness of the cell walls in the central part of the center-high-heat-capacity honeycomb fired body is made larger than the average thickness of the cell walls in the peripheral part of the center-high-heat-capacity honeycomb fired body.

More specifically, in the honeycomb structured body according to the first embodiment of the present invention, the thickness of the cell wall gradually decreases from the central part to the peripheral part of the center-high-heat-capacity honeycomb fired body.

Fig. 4 is a side view of the inner honeycomb fired body illustrated in Figs. 2(a) and 2(b).

As illustrated in Fig. 4, in the inner honeycomb fired body 110, the average thickness of the cell walls in the central part of the inner honeycomb fired body 110 is larger than the average thickness of the cell walls in the peripheral part of the inner honeycomb fired body 110.

Specifically, in the inner honeycomb fired body 110 illustrated in Fig. 4, the thickness of the cell wall 113 gradually decreases from the central part to the peripheral part of the inner honeycomb fired body 110.

Therefore, the inner honeycomb fired body 110 illustrated in Fig. 4 is a center-high-heat-capacity honeycomb fired body in which the heat capacity per unit volume in the central part of the honeycomb fired body is larger than the heat capacity per unit volume in the peripheral part of the honeycomb fired body.

Here, in Fig. 4, "$Z_1$" indicates the thickness of the cell wall 113 of the inner honeycomb fired body 110. Thus, the expression "the thickness of the cell wall in the honeycomb fired body" refers to the shortest length among the lengths between two adjacent cells.

The thickness of the cell wall in the honeycomb fired body is measured by the following method. By the following measuring method, the thickness of the cell wall can be measured even in the case where the shapes of the cell lines to be measured are not constant.

First, a measuring instrument for reading a digital stage position is attached on the stage of an optical microscope (produced by Nikon Corporation, measuring microscope MM-40), and thereafter a sample (honeycomb fired body), a measuring object, is fixed to the stage.

Next, a microscope is focused on one side (side positioned in "$Z_{11}$" in Fig. 4) of one cell of a cell wall to be measured. Subsequently, the stage is moved, and the microscope is focused on one side (side positioned in "$Z_{12}$" in fig. 4) of the other cell of a cell wall.

Then, the distance in which the stage has been moved is read, and the distance is regarded as the thickness of the cell wall.

As illustrated in Fig. 4, all of the cells 111 in the honeycomb fired body 110 have quadrangle (square) shapes in a cross section perpendicular to the longitudinal direction.

In the inner honeycomb fired body 110 illustrated in Fig. 4, a cell located in the center of the cross section of the honeycomb fired body (a cell located in the position "A" in Fig. 4) is the smallest, and the size of a cell increases as the distance gets farther from the center of the cross section of the honeycomb fired body.

Hereinafter, a method for calculating the heat capacity per unit volume in the central part of the honeycomb fired body will be described.

First, the area of the cell wall located in the central part of the honeycomb fired body is measured with an optical microscope. Next, the area of the entire central part of the honeycomb fired body including cells is measured. Subsequently, the ratio of the area of the cell wall to the area of the entire central part of the honeycomb fired body (hereinafter, also referred to as a cell wall ratio) is determined. Then, the heat capacity per unit volume in the central part of the honeycomb fired body is determined by the following formula (1).

$$
\begin{aligned}
&\text{Heat capacity per unit volume in the central part of} \\
&\text{the honeycomb fired body}/(J/(K \cdot m^3)) = \{\text{cell wall ratio} \\
&(\%)/100\} \times \text{density of the material of the cell wall } (kg/m^3) \\
&\times \text{specific heat of the material of the cell wall } (J/kg \cdot K) \\
&\cdots (1)
\end{aligned}
$$

The heat capacity per unit volume in the peripheral part of the honeycomb fired body can also be determined by the same method. Here, as described above, the peripheral part of the honeycomb fired body does not include the peripheral wall in the honeycomb fired body.

In the honeycomb structured body according to the first embodiment of the present invention, as long as the thickness of the cell wall gradually decreases from the central part to the peripheral part of the center-high-heat-capacity honeycomb fired body, the shape of the cell wall is not limited to the shape illustrated in Fig. 4.

In the honeycomb structured body according to the first embodiment of the present invention, the average thickness of the cell walls in the central part of the center-high-heat-capacity honeycomb fired body is preferably 0.10 to 0.20 mm, and more preferably 0.12 to 0.18 mm.

If the average thickness of the cell walls in the central part of the center-high-heat-capacity honeycomb fired body is less than 0.10 mm, the heat capacity per unit volume in the central part of the center-high-heat-capacity honeycomb fired body is too small. Therefore, it is difficult to prevent a temperature rise in the central part of the center-high-heat-capacity honeycomb fired body. As a result, if the honeycomb structured body has a high temperature, cracks are more likely to occur in the honeycomb structured body. If the average thickness of the cell walls in the central part of the center-high-heat-capacity honeycomb fired body is less than 0.10 mm, the average thickness of the cell walls in the peripheral part of the center-high-heat-capacity honeycomb fired body is less than 0.10 mm. Therefore, the strength of the honeycomb fired body is less likely to be secured.

In contrast, if the average thickness of the cell walls in the central part of the center-high-heat-capacity honeycomb fired body is more than 0.20 mm, the heat capacity per unit volume in the central part of the center-high-heat-capacity honeycomb fired body is large. Therefore, the effect of preventing a temperature rise in the central part of the center-high-heat-capacity honeycomb fired body is improved. However, when the cell wall is too thick, the filtration pressure of exhaust gases passing through the cell wall rises, resulting in an increase in pressure loss, another required performance as the honeycomb structured body.

In the honeycomb structured body according to the first embodiment of the present invention, the average thickness of the cell walls in the peripheral part of the center-high-heat-capacity honeycomb fired body is preferably 90 to 98% and more preferably 92 to 96% of the average thickness of the cell walls in the central part of the center-high-heat-capacity honeycomb fired body.

If the average thickness of the cell walls in the peripheral part of the center-high-heat-capacity honeycomb fired body is less than 90% of the average thickness of the cell walls in the central part of the center-high-heat-capacity honeycomb fired body, the strength of the honeycomb fired body is less likely to be secured.

In contrast, if the average thickness of the cell walls in the peripheral part of the center-high-heat-capacity honeycomb fired body is more than 98% of the average thickness of the cell walls in the central part of the center-high-heat-capacity honeycomb fired body, the difference in the average thickness of the cell walls in between the central part and the peripheral part of the center-high-heat-capacity honeycomb fired body is small. Accordingly, since the difference in heat capacity per unit volume in between the central part and the peripheral part of the center-high-heat-capacity honeycomb fired body is small, the effect of reducing the temperature difference in between the central part and the peripheral part of the center-high-heat-capacity honeycomb fired body is less likely to be obtained.

Hereinafter, the method of measuring the average thickness of the cell walls in the central part and the peripheral part of the honeycomb fired body will be described.

First, the thickness of the cell wall in a cell line of a cell (cells) located closest to the center of the cross section of the honeycomb fired body is measured at predetermined intervals with an optical microscope by the aforementioned method. This measurement is made in cell lines in different two directions (for example, a longitudinal direction, a transverse direction, and the like). Then, the average thicknesses of the cell walls measured are calculated in the central part and the peripheral part of the honeycomb fired body, and the obtained values are regarded as the average thicknesses in the central part and the peripheral part of the honeycomb fired body.

Next, an outer honeycomb fired body in the honeycomb structured body of the first embodiment of the present invention will be described.

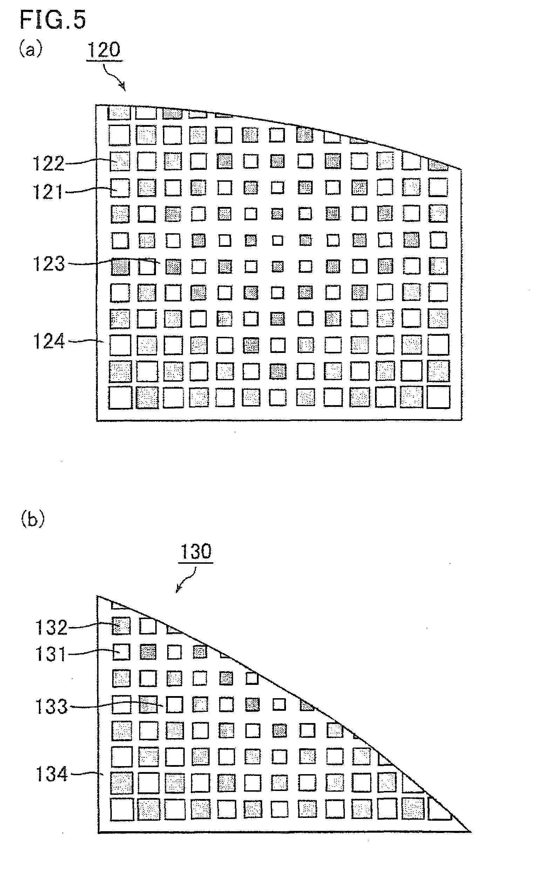

Figs. 5(a) and 5(b) are side views each schematically illustrating one example of the outer honeycomb fired body in the honeycomb structured body of the first embodiment of the present invention.

An outer honeycomb fired body 120 illustrated in Fig. 5(a) and an outer honeycomb fired body 130 illustrated in Fig. 5(b) have a cross-sectional shape excluding part of the inner honeycomb fired body 110 illustrated in Figs. 2(a), 2(b), and 4.

This is because upon manufacturing the honeycomb structured body 10 illustrated in Fig. 1(a) and 1(b), as described below, multiple honeycomb fired bodies 110 having shapes illustrated in Figs. 2(a), 2(b), and 4 are combined with one another to manufacture a rectangular pillar-shaped ceramic block, and thereafter the periphery of the rectangular pillar-shaped ceramic block is cut to form a round pillar-shaped ceramic block.

Therefore, the outer honeycomb fired body 120 illustrated in Fig. 5(a) and the outer honeycomb fired body 130 illustrated in Fig. 5(b) have the same configuration as that of the inner honeycomb fired body 110 illustrated in Figs. 2(a), 2(b) and 4, except that the cross-sectional shapes are different. Here, in the outer honeycomb fired body 120 illustrated in Fig. 5(a) and the outer honeycomb fired body 130 illustrated in Fig. 5(b), the cut portions have no peripheral wall.

In the honeycomb structured body according to the first embodiment of the present invention, the thickness of the peripheral wall in each of the honeycomb fired bodies (inner honeycomb fired bodies and outer honeycomb fired bodies) is preferably 0.20 to 0.50 mm, and more preferably 0.25 to 0.40 mm.

If the thickness of the peripheral wall in the honeycomb fired body is less than 0.20 mm, the strength of the honeycomb fired body is less likely to be secured. In contrast, if the thickness of the peripheral wall in the honeycomb fired body is more than 0.50 mm, the weight of the entire honeycomb structured body increases though weight reduction is desired.

Here, in Fig. 4, "$Y_1$" indicates the thickness of the peripheral wall 114 of the inner honeycomb fired body 110. Thus, the expression "the thickness of the peripheral wall in the honeycomb fired body" refers to the shortest length among the lengths between cells located in the outermost part of the honeycomb fired body and the periphery of the honeycomb fired body. Here, the thickness of the peripheral wall in the honeycomb fired body can be measured by the same method for measuring the thickness of the cell wall in the honeycomb fired body.

Next, a method for manufacturing the honeycomb structured body according to the first embodiment of the present embodiment will be described. Here, a case will be described where silicon carbide is used as ceramic powder.

(1) A wet mixture containing ceramic powder and a binder is extrusion-molded to manufacture a honeycomb molded body (molding process).

Specifically, silicon carbide powders having different average particle sizes as ceramic powder, an organic binder, a liquid plasticizer, a lubricant, and water are mixed to prepare a wet mixture for manufacturing a honeycomb molded body. Then, the wet mixture is charged into an extrusion molding machine and extrusion-molded to manufacture honeycomb molded bodies in predetermined shapes.

Here, a honeycomb molded body is manufactured with a die that can make the cross-sectional shape having a cell structure (the shape and arrangement of cells) illustrated in Fig. 4. The die is provided with a groove for forming cell walls of a honeycomb molded body. A honeycomb molded body having a predetermined cross-sectional shape can be manufactured by electrically discharging, polishing the groove of the die, and the like.

(2) Next, the honeycomb molded bodies are cut at a predetermined length and dried with use of a drying apparatus such as a microwave drying apparatus, a hot-air drying apparatus, a dielectric drying apparatus, a reduced-pressure drying apparatus, a vacuum drying apparatus, and a freeze drying apparatus. Then, predetermined cells are sealed by filling the cells with a plug material paste to be a plug material (sealing process).

Here, the wet mixture may be used as the plug material paste.

(3) Then, the honeycomb molded body is heated in a degreasing furnace to remove organic matters in the honeycomb molded body (degreasing process). The degreased honeycomb molded body is transferred to a firing furnace and fired (firing process). In this manner, the honeycomb fired body as illustrated in Figs. 2(a), 2(b), and 4 is manufactured. The sealing material paste filled into the end portion of the cells is fired by heating to be a sealing material.

Conditions for cutting, drying, sealing, degreasing, and firing may be conditions conventionally used for manufacturing honeycomb fired bodies.

(4) Next, an adhesive paste is applied to predetermined side faces of the honeycomb fired bodies, which have cells each sealed at a predetermined end portion, to form adhesive paste layers. The adhesive paste layers are heated and solidified to form adhesive layers, whereby a ceramic block in which multiple honeycomb fired bodies are combined by interposing an adhesive layer is formed (combining process).

Here, the adhesive paste contains, for example, an inorganic binder, an organic binder, and inorganic particles. The adhesive paste may further contain at least one of an inorganic fiber and a whisker.

(5) A periphery cutting process is carried out to cut the ceramic block (periphery cutting process).

Specifically, the periphery of the ceramic block is cut with a diamond cutter, whereby a ceramic block whose periphery is cut into a round pillar shape is manufactured.

(6) Further, a peripheral coating material paste is applied to the peripheral face of the round pillar-shaped ceramic block, and is dried and solidified to form a peripheral coat layer (peripheral coat layer forming process).

The adhesive paste may be used as the peripheral coating material paste. Or alternatively, the peripheral coating material paste may be a paste having a composition different from that of the adhesive paste.

It is to be noted that the peripheral coat layer is not necessarily formed and may be formed according to need.

In this manner, it is possible to manufacture the honeycomb structured body according to the first embodiment of the present invention.

Hereinafter, the effects of the honeycomb structured body according to the first embodiment of the present invention are listed.

(1) The honeycomb structured body according to the present embodiment includes center-high-heat-capacity honeycomb fired bodies in each of which the heat capacity per unit volume in the central part of the honeycomb fired body is larger than the heat capacity per unit volume in the peripheral part of the honeycomb fired body.

Therefore, in the case where the honeycomb structured body has a high temperature, temperature tends not to increase in the central part of a center-high-heat-capacity honeycomb fired body. In contrast, temperature tends to increase in the peripheral part of the center-high-heat-capacity honeycomb fired body. However, heat can be emitted around the high-heat-capacity honeycomb fired body (to an adhesive layer, or to a peripheral coat layer in the case where the peripheral coat layer is formed). Accordingly, since the temperature difference in between the central part and the peripheral part of the center-high-heat-capacity honeycomb fired body can be suppressed, cracks resulting from the temperature difference can be prevented. Consequently, cracks tend not to occur in the honeycomb structured body.

(2) In the honeycomb structured body of the present embodiment, the average thickness of the cell walls in the central part of the center-high-heat-capacity honeycomb fired body is larger than the average thickness of the cell walls in the peripheral part of the center-high-heat-capacity honeycomb fired body.

When the average thickness of the cell walls in the central part of the center-high-heat-capacity honeycomb fired body is larger than the average thickness of the cell walls in the peripheral part of the center-high-heat-capacity honeycomb fired body, the heat capacity per unit volume in the central part of the center-high-heat-capacity honeycomb fired body can be larger than the heat capacity per unit volume in the peripheral part of the center-high-heat-capacity honeycomb fired body.

(3) Pressure loss is comparatively small in portions in which the cell walls of the honeycomb fired bodies are thin. In the honeycomb structured body according to the present embodiment, since the average thickness of the cell walls in the peripheral part of the center-high-heat-capacity honeycomb fired body is smaller than the average thickness of the cell walls in the central part of the center-high-heat-capacity honeycomb fired body, exhaust gases are more likely allowed to flow into the peripheral part of the center-high-heat-capacity honeycomb fired body. As a result, PM is more likely to be deposited in the peripheral part than in the central part of the center-high-heat-capacity honeycomb fired body. Therefore, in the case where the honeycomb structured body according to the present embodiment is used for collecting PM in exhaust gases, heating in the central part of the center-high-heat-capacity honeycomb fired body can be comparatively small upon burning PM during the regenerating treatment. In contrast, in the peripheral part of the center-high-heat-capacity honeycomb fired body, since the amount of deposited PM is large, the heat quantity is comparatively large. Further, since the heat capacity is small, the temperature in the peripheral part of the center-high-heat-capacity honeycomb fired body tends to increase. However, in the peripheral part of the center-high-heat-capacity honeycomb fired body, heat can be emitted around the center-high-heat-capacity honeycomb fired body (to an adhesive layer, or to a peripheral coat layer in the case where the peripheral coat layer is formed). Accordingly, since the temperature difference in between the central part and the peripheral part of the center-high-heat-capacity honeycomb fired body can be more reduced, cracks can be prevented.

(4) In the honeycomb structured body of the present embodiment, the thickness of the cell wall gradually decreases from the central part to the peripheral part of the center-high-heat-capacity honeycomb fired body.

In the honeycomb structured body of the present embodiment, the heat capacity per unit volume in the center-high-heat-capacity honeycomb fired body can be gradually decreased from the central part to the peripheral part of the center-high-heat-capacity honeycomb fired body. Therefore, heat can be transferred smoothly from the central part to the peripheral part of the center-high-heat-capacity honeycomb fired body.

(5) In the honeycomb structured body of the present embodiment, all of the honeycomb fired bodies not located in the periphery of the ceramic block are the center-high-heat-capacity honeycomb fired bodies.

In the honeycomb structured body of the present embodiment, in the case where exhaust gases flow into the honeycomb structured body, and thereby the central part of the honeycomb structured body has a high temperature, the temperature difference in between the central part and the peripheral part of the center-high-heat-capacity honeycomb fired body can be reduced because all of the honeycomb fired bodies located in the central part of the honeycomb structured body are the center-high-heat-capacity honeycomb fired bodies. Therefore, cracks can be prevented in the honeycomb structured body.

(Second embodiment)

Hereinafter, a second embodiment that is one embodiment of the present invention will be described.

Inner honeycomb fired bodies and outer honeycomb fired bodies in the honeycomb structured body according to the second embodiment of the present invention have the same configurations as those of the inner honeycomb fired bodies and outer honeycomb fired bodies in the honeycomb structured body according to the first embodiment of the present invention. In addition, the combination of the inner honeycomb fired bodies and outer honeycomb fired bodies in the ceramic block (honeycomb structured body) is the same as that of the first embodiment of the present invention.

Further, in the honeycomb structured body according to the second embodiment of the present invention, as in the honeycomb structured body according to the first embodiment of the present invention, all of the honeycomb fired bodies not located in the periphery of the ceramic block (namely, inner honeycomb fired bodies) are the center-high-heat-capacity honeycomb fired bodies.

In the second embodiment of the present invention, in each of the honeycomb fired bodies (inner honeycomb fired bodies and outer honeycomb fired bodies) in the honeycomb structured body, a large number of cells include large volume cells and small volume cells, and each of the large volume cells is larger than each of the small volume cells in a cross section perpendicular to the longitudinal direction.

First, an inner honeycomb fired body in the honeycomb structured body of the second embodiment of the present invention will be described.

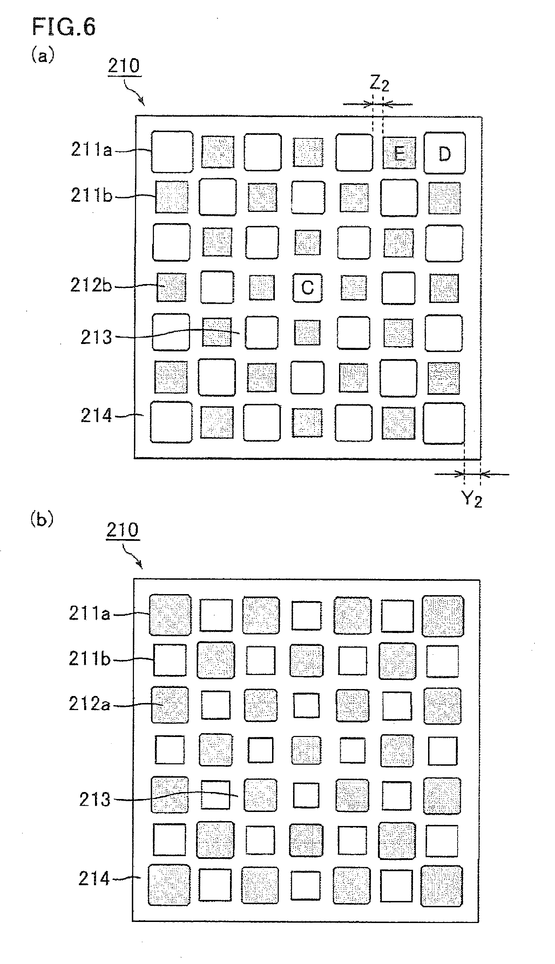

Fig. 6(a) is a side view schematically illustrating, from one end face side, one example of an inner honeycomb fired body in a honeycomb structured body of a second embodiment of the present invention. Fig. 6(b) is a side view schematically illustrating, from the other end face side, the inner honeycomb fired body illustrated in Fig. 6(a).

The inner honeycomb fired body 210 illustrated in Figs. 6(a) and 6(b) have cells 211a and cells 211b longitudinally disposed in parallel with one another with a cell wall 213 therebetween, and a peripheral wall 214 is formed around the inner honeycomb fired body 210.

In the inner honeycomb fired body 210 illustrated in Figs. 6(a) and 6(b), the cells 211a having an octagonal cross-sectional shape (cross-sectional shape perpendicular to a longitudinal direction) are open at an end portion on the side of one end face of the inner honeycomb fired body 210, and are sealed with a plug material 212a at an end portion on the side of the other end face. In contrast, the cells 211b having a quadrangle (square) cross-sectional shape are sealed with a plug material 212b at an end portion on the side of one end face of the inner honeycomb fired body 210, and are open at an end portion on the side of the other end face.

Therefore, exhaust gases which have flowed into one of the cells 211a surely pass through the cell wall 213 separating the cells 211a and cells 211b, and flow out from another cell 211b. As a result, the cell wall 213 functions as a filter.

In the honeycomb structured body according to the second embodiment of the present invention, all of the honeycomb fired bodies not located in the periphery of the ceramic block (namely, inner honeycomb fired bodies) are the center-high-heat-capacity honeycomb fired bodies in each of which the heat capacity per unit volume in the central part of the honeycomb fired body is larger than the heat capacity per unit volume in the peripheral part of the honeycomb fired body .

In the honeycomb structured body according to the second embodiment of the present invention, in order to make the heat capacity per unit volume in the central part of the center-high-heat-capacity honeycomb fired body larger than the heat capacity per unit volume in the peripheral part of the center-high-heat-capacity honeycomb fired body, the average thickness of the cell walls in the central part of the center-high-heat-capacity honeycomb fired body is made larger than the average thickness of the cell walls in the peripheral part of the center-high-heat-capacity honeycomb fired body.

More specifically, in the honeycomb structured body according to the second embodiment of the present invention, the thickness of the cell wall gradually decreases from the central part to the peripheral part of the center-high-heat-capacity honeycomb fired body.

As illustrated in Figs. 6(a) and 6(b), in the inner honeycomb fired body 210, the average thickness of the cell walls in the central part of an inner honeycomb fired body 210 is larger than the average thickness of the cell walls in the peripheral part of the inner honeycomb fired body 210.

Specifically, in the inner honeycomb fired body 210 illustrated in Figs. 6(a) and 6(b), the thickness of cell wall 213 ("$Z_2$" indicates the thickness of the cell wall in Fig. 6(a)) gradually decreases from the central part to the peripheral part of the inner honeycomb fired body 210.

Therefore, the inner honeycomb fired body 210 illustrated in Figs. 6(a) and 6(b) is a center-high-heat-capacity honeycomb fired body in which the heat capacity per unit volume in the central part of the honeycomb fired body is larger than the heat capacity per unit volume in the peripheral part of the honeycomb fired body.

In the inner honeycomb fired body 210 illustrated in Figs. 6(a) and 6(b), a cell located in the center of the cross section of the honeycomb fired body (a cell located in the position "C" in Fig. 6(a)) is the smallest, and the size of a cell increases as the distance gets farther from the center of the cross section of the honeycomb fired body.

As in the inner honeycomb fired body 210 illustrated in Figs. 6(a) and 6(b), if the thickness of the cell wall is constant, cells having cross-sectional areas relatively larger than those of the other cells are referred to as large volume cells, and cells having cross-sectional areas relatively smaller than those of the other cells are referred to as small volume cells. Accordingly, in the inner honeycomb fired body 210 illustrated in Figs. 6(a) and 6(b), the cells 211a having an octagonal cross-sectional shape are large volume cells, and the cells 211b having a quadrangle (square) cross-sectional shape are small volume cells.

In the honeycomb structured body according to the second embodiment of the present invention, the ratio of the area of each of the large volume cells in a cross section perpendicular to the longitudinal direction to the area of each of the small volume cells in a cross section perpendicular to the longitudinal direction is preferably 1.4 to 2.8, and more preferably 1.5 to 2.4.

If the area ratio is less than 1.4, the difference between the area of each of the large volume cells in a cross section and the area of each of the small volume cells in a cross section is small, and therefore the effect of providing the large volume cells and small volume cells is less likely to be exerted. In contrast, if the area ratio is more than 2.8, the rate of cell walls separating large volume cells is high. As a result, in the case where the honeycomb structured body according to the second embodiment of the present invention is used for collecting PM in exhaust gases, exhaust gases are less likely to pass through the cell walls separating large volume cells, resulting in an increase in pressure loss, another required performance as the honeycomb structured body.

The expression "the ratio of the area of each of the large volume cells in a cross section perpendicular to the longitudinal direction to the area of each of the small volume cells in a cross section perpendicular to the longitudinal direction" used herein refers to a ratio of the cross-sectional area of each of the large volume cells located farthest away from the center of the cross section of the honeycomb fired body to the cross-sectional area of each of the small volume cells located farthest away from the center of the cross section of the honeycomb fired body.

Accordingly, in the inner honeycomb fired body 210 illustrated in Figs. 6(a) and 6(b), the ratio of the area of each of the large volume cells in a cross section perpendicular to the longitudinal direction to the area of each of the small volume cells in a cross section perpendicular to the longitudinal direction refers to a ratio of the cross-sectional area of each of the large volume cells located in the position "D" to the cross-sectional area of each of the small volume cells located in the position "E".

Fig. 7 is a side view schematically illustrating another example of an inner honeycomb fired body in the honeycomb structured body of the second embodiment of the present invention.

In an inner honeycomb fired body 220 illustrated in Fig. 7, as in the inner honeycomb fired body 210 illustrated in Figs. 6(a) and 6(b), a large volume cell 221a and a small volume cell 221b are alternately provided. Each of the large volume cells 221a has an octagonal shape in a cross section, and each of the small volume cells 221b has a quadrangle (square) shape in a cross section.

In the inner honeycomb fired body 220 illustrated in Fig. 7 and the inner (honeycomb fired body 210 illustrated in Figs. 6(a) and 6(b), the ratios of the area of each of the large volume cells in a cross section perpendicular to the longitudinal direction to the area of each of the small volume cells in a cross section perpendicular to the longitudinal direction are different. The area ratio in the inner honeycomb fired body 220 illustrated in Fig. 7 is larger than the area ratio in the inner honeycomb fired body 210 illustrated in Fig. 6(a) and Fig. 6(b).

In the second embodiment of the present invention, each of the large volume cells and small volume cells has a cross-sectional shape such that the cross-sectional area of each of the large volume cells is larger than the cross-section area of each of the small volume cells. Therefore, the cross-sectional shape of each of the large volume cells and small volume cells is not limited to an octagon and a quadrangle, respectively, and any cross-sectional shape may be adopted. For example, the following shapes may be employed.

Fig. 8 is a side view schematically illustrating another example of an inner honeycomb fired body in the honeycomb structured body of the second embodiment of the present invention.

In an inner honeycomb fired bodies 230 illustrated in Fig. 8, the large volume cells 231a have a quadrangle (square) cross-sectional shape, and the small volume cells 231b have a quadrangle (square) cross-sectional shape.

In the honeycomb structured body according to the second embodiment of the present invention, as long as the thickness of the cell wall gradually decreases from the central part to the peripheral part of the center-high-heat-capacity honeycomb fired body, the shape of the cell wall is not limited to shapes illustrated in Figs. 6, 7, and 8.

In the honeycomb structured body according to the second embodiment of the present invention, the preferable average thickness of the cell walls in the central part of the center-high-heat-capacity honeycomb fired body and the preferable average thickness of the cell walls in the peripheral part of the center-high-heat-capacity honeycomb fired body are the same as those of the first embodiment of the present invention.

Next, an outer honeycomb fired body in the honeycomb structured body according to the second embodiment of the present invention will be described.

As described in the first embodiment of the present invention, it is sufficient that the outer honeycomb fired body in the honeycomb structured body according to the second embodiment of the present invention has a cross-sectional shape excluding part of the inner honeycomb fired body in the honeycomb structured body according to the second embodiment of the present invention.

In the honeycomb structured body according to the second embodiment of the present invention, the preferable thickness of the peripheral wall in each of the honeycomb fired bodies (inner honeycomb fired bodies and outer honeycomb fired bodies) is the same as that of the first embodiment of the present invention.

In Fig. 6(a), "$Y_2$" represents the thickness of the peripheral wall 214 of the inner honeycomb fired body 210.

In the method for manufacturing the honeycomb structured body according to the second embodiment of the present invention, a honeycomb structured body can be manufactured as in the first embodiment of the present invention, except that the shape of a die used for extrusion molding is changed and a honeycomb molded body having a predetermined shape is manufactured.

In the second embodiment of the present invention, not only the effects (1) to (5) described in the first embodiment of the present invention but also the following effects can be exerted.

(6) In the honeycomb structured body according to the present embodiment, a large number of cells include large volume cells and small volume cells, and each of the large volume cells is larger than each of the small volume cells in a cross section perpendicular to the longitudinal direction.

In the case where the honeycomb structured body according to the present embodiment is used for collecting PM in exhaust gases, a large amount of PM can be collected in the large volume cells. Therefore, the temperature of the honeycomb fired bodies tends to rise upon burning PM during the regenerating treatment. However, in the honeycomb structured body of the present embodiment, since the temperature difference in between the central part and the peripheral part of the center-high-heat-capacity honeycomb fired body can be reduced, cracks can be prevented.

(Third embodiment)

Hereinafter, a third embodiment that is one embodiment of the present invention will be described.

Inner honeycomb fired bodies and outer honeycomb fired bodies in the honeycomb structured body according to the third embodiment of the present invention have the same configurations as those of the inner honeycomb fired bodies and outer honeycomb fired bodies in the honeycomb structured body according to the first embodiment of the present invention. In addition, the combination of the inner honeycomb fired bodies and outer honeycomb fired bodies in the ceramic block (honeycomb structured body) is the same as that of the first embodiment of the present invention.

Further, in the honeycomb structured body according to the third embodiment of the present invention, as in the honeycomb structured body according to the first embodiment of the present invention, all of the honeycomb fired bodies not located in the periphery of the ceramic block (namely, inner honeycomb fired bodies) are the center-high-heat- capacity honeycomb fired bodies.

In the first embodiment of the present invention, the thickness of the cell wall gradually decreases from the central part to the peripheral part of the center-high-heat-capacity honeycomb fired body. In contrast, in the third embodiment of the present invention, the thickness of the cell wall continuously decreases from the central part to the peripheral part of the center-high-heat-capacity honeycomb fired body.

First, an inner honeycomb fired body in the honeycomb structured body of the third embodiment of the present invention will be described.

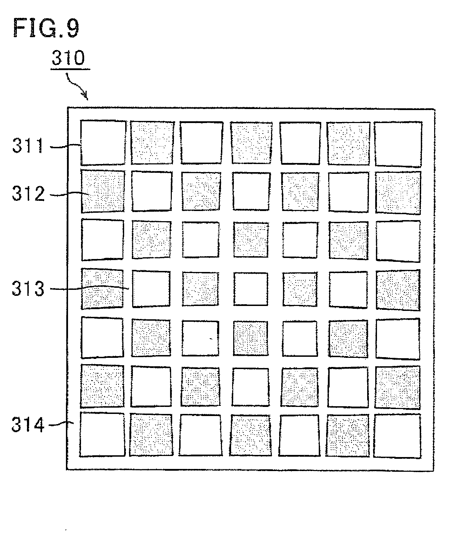

Fig. 9 is a side view schematically illustrating one example of an inner honeycomb fired body in a honeycomb structured body of a third embodiment of the present invention.

An inner honeycomb fired body 310 illustrated in Fig. 9 has a large number of cells 311 longitudinally disposed in parallel with one another with a cell wall 313 therebetween, and a peripheral wall 314 is formed around the inner honeycomb fired body 310. In addition, either one end portion of each of the cells 311 is sealed with a plug material 312. Therefore, exhaust gases which have flowed into one of the cells 311 with an opening on one end face surely pass through the cell wall 313 separating the cells 311, and flow out from another cell 311 with an opening on the other end face. As a result, the cell wall 313 functions as a filter.

In the honeycomb structured body according to the third embodiment of the present invention, in order to make the heat capacity per unit volume in the central part of the center-high-heat-capacity honeycomb fired body larger than the heat capacity per unit volume in the peripheral part of the center-high-heat-capacity honeycomb fired body, the average thickness of the cell walls in the central part of the center-high-heat-capacity honeycomb fired body is made larger than the average thickness of the cell walls in the peripheral part of the center-high-heat-capacity honeycomb fired body.

More specifically, in the honeycomb structured body according to the third embodiment of the present invention, the thickness of the cell wall continuously decreases from the central part to the peripheral part of the center-high-heat-capacity honeycomb fired body.

As illustrated in Fig. 9, in the inner honeycomb fired body 310, the average thickness of the cell walls in the central part of the inner honeycomb fired body 310 is larger than the average thickness of the cell walls in the peripheral part of the inner honeycomb fired body 310.

Specifically, in the inner honeycomb fired body 310 illustrated in Fig. 9, the thickness of the cell wall 313 continuously decreases from the central part to the peripheral part of the inner honeycomb fired body 310. The cell wall 313 is formed by a curve line, and has a swelling center.

Therefore, the inner honeycomb fired body 310 illustrated in Fig. 9 is a center-high-heat-capacity honeycomb fired body in which the heat capacity per unit volume in the central part of the honeycomb fired body is larger than the heat capacity per unit volume in the peripheral part of the honeycomb fired body.

As illustrated in Fig. 9, the cross-sectional shapes of the cells 311 in the inner honeycomb fired body 310 perpendicular to a longitudinal direction are all quadrangles.

In the inner honeycomb fired bodies 310 illustrated in Fig. 9, if the cross-sectional area of each of all the cells is identical to the cross-sectional area of each of the cells located in portions farthest away from the center of the cross section of the honeycomb fired body, the thickness of each of the cell walls is constant, and all of the cells are orderly arranged.

In the honeycomb structured body according to the third embodiment of the present invention, as long as the thickness of the cell wall continuously decreases from the central part to the peripheral part of the center-high-heat-capacity honeycomb fired body, the shape of the cell wall is not limited to the shape illustrated in Fig. 9.

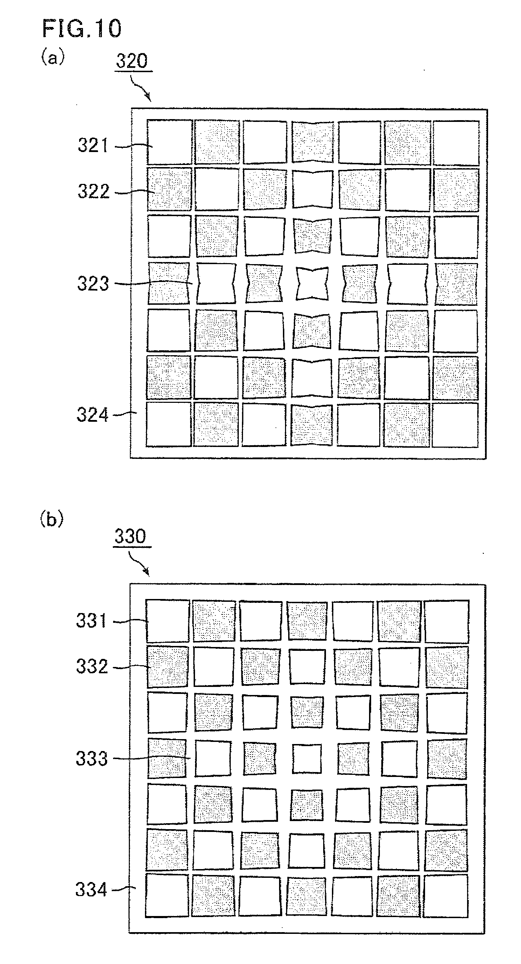

Figs. 10(a) and 10(b) are side views each schematically illustrating another example of an inner honeycomb fired body in the honeycomb structured body of the third embodiment of the present invention.

In an inner honeycomb fired body 320 illustrated in Fig. 10(a) and an inner honeycomb fired body 330 illustrated in Fig. 10(b), as in the inner honeycomb fired body 310 illustrated in Fig. 9, the thickness of the cell wall continuously decreases from the central part to the peripheral part of the inner honeycomb fired body 320 or 330.

In the inner honeycomb fired body 320 illustrated in Fig. 10(a), a cell wall 323 is formed by a curve line, and has a sharp center.

In the inner honeycomb fired body 330 illustrated in Fig. 10(b), a cell wall 333 is formed by a straight line, and has a rhombic shape.

In the honeycomb structured body according to the third embodiment of the present invention, the preferable average thickness of the cell walls in the central part of the center-high-heat-capacity honeycomb fired body and the preferable average thickness of the cell walls in the peripheral part of the center-high-heat-capacity honeycomb fired body are the same as those of the first embodiment of the present invention.

Next, an outer honeycomb fired body in the honeycomb structured body according to the third embodiment of the present invention will be described.

As described in the first embodiment of the present invention, it is sufficient that the outer honeycomb fired body in the honeycomb structured body according to the third embodiment of the present invention has a cross-sectional shape excluding part of the inner honeycomb fired body in the honeycomb structured body according to the third embodiment of the present invention.

In the honeycomb structured body according to the third embodiment of the present invention, the preferable thickness of the peripheral wall in each of the honeycomb fired bodies (inner honeycomb fired bodies and outer honeycomb fired bodies) is the same as that of the first embodiment of the present invention.

In the honeycomb structured body according to the third embodiment of the present invention, the cross-sectional shapes of the cells provided in the inner honeycomb fired bodies and the outer honeycomb fired bodies may be all quadrangles, or may be a shape made of large volume cells and small volume cells as in the second embodiment of the present invention.

In the honeycomb structured body according to the third embodiment of the present invention, the cross-sectional shapes of the cells are preferably all quadrangles in terms of easier manufacture of the honeycomb molded body.

In the method for manufacturing the honeycomb structured body according to the third embodiment of the present invention, a honeycomb structured body can be manufactured as in the first embodiment of the present invention, except that the shape of a die used for extrusion molding is changed and a honeycomb molded body having a predetermined shape is manufactured.

In the third embodiment of the present invention, not only the effects (1) to (3), and (5) described in the first embodiment of the present invention but also the following effects can be exerted.

(7) In the honeycomb structured body of the present embodiment, the thickness of the cell wall continuously decreases from the central part to the peripheral part of the center-high-heat-capacity honeycomb fired body.

In the honeycomb structured body of the present embodiment, the heat capacity per unit volume in the center-high-heat-capacity honeycomb fired body can be continuously decreased from the central part to the peripheral part of the center-high-heat-capacity honeycomb fired body. Therefore, heat can be transferred smoothly from the central part to the peripheral part of the center-high-heat-capacity honeycomb fired body.

(Fourth embodiment)

Hereinafter, a fourth embodiment that is one embodiment of the present invention will be described.

Inner honeycomb fired bodies and outer honeycomb fired bodies in the honeycomb structured body according to the fourth embodiment of the present invention have the same configurations as those of the inner honeycomb fired bodies and outer honeycomb fired bodies in the honeycomb structured body according to the first embodiment of the present invention. In addition, the combination of the inner honeycomb fired bodies and outer Honeycomb fired bodies in the ceramic block (honeycomb structured body) is the same as that of the first embodiment of the present invention.

Further, in the honeycomb structured body according to the fourth embodiment of the present invention, as in the honeycomb structured body according to the first embodiment of the present invention, all of the honeycomb fired bodies not located in the periphery of the ceramic block (namely, inner honeycomb fired bodies) are the center-high-heat-capacity honeycomb fired bodies.

In the first embodiment of the present invention, the thickness of the cell wall gradually decreases from the central part to the peripheral part of the center-high-heat-capacity honeycomb fired body. In contrast, in the fourth embodiment of the present invention, cell walls located in the outermost part of the center-high-heat-capacity honeycomb fired body are thinner than cell walls other than the cell walls located in the outermost part of the center-high-heat-capacity honeycomb fired body.

First, an outer honeycomb fired body in the honeycomb structured body of the fourth embodiment of the present invention will be described.

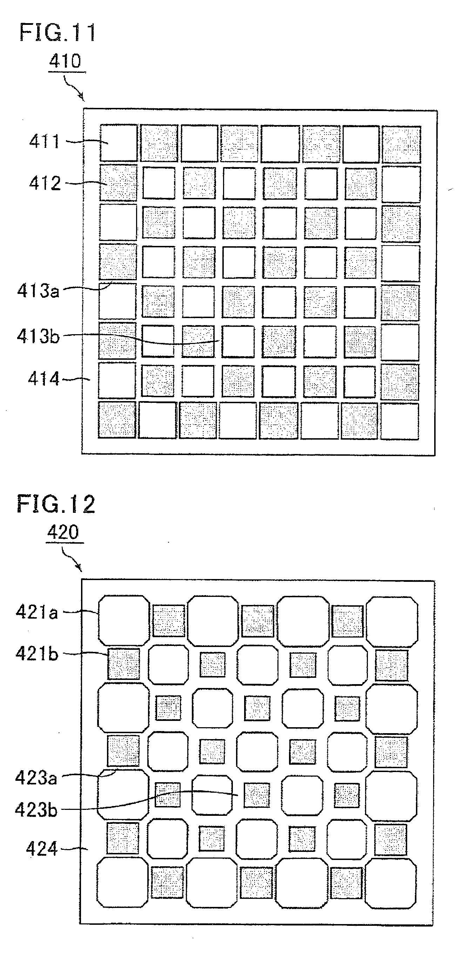

Fig. 11 is a side view schematically illustrating one example of an inner honeycomb fired body in a honeycomb structured body of a fourth embodiment of the present invention.

An inner honeycomb fired body 410 illustrated in Fig. 11 has a large number of cells 411 longitudinally disposed in parallel with one another with a cell wall 413a or 413b therebetween, and a peripheral wall 414 is formed around the inner honeycomb fired body 410. In addition, either one end portion of each of the cells 411 is sealed with a plug material 412.

Therefor, exhaust gases which have flowed into one of the cells 411 with an opening on one end face surely pass through the cell wall 413a or 413b separating the cells 411, and flow out from another cell 411 with an opening on the other end face. As a result, the cell wall 413a or 413b functions as a filter.

In the honeycomb structured body according to the fourth embodiment of the present invention, in order to make the heat capacity per unit volume in the central part of the center-high-heat-capacity honeycomb fired body larger than the heat capacity per unit volume in the peripheral part of the center-high-heat-capacity honeycomb fired body, the average thickness of the cell walls in the central part of the center-high-heat-capacity honeycomb fired body is made larger than the average thickness of the cell walls in the peripheral part of the center-high-heat-capacity honeycomb fired body.

More specifically, in the honeycomb structured body according to the fourth embodiment of the present invention, cell walls located in the outermost part of the center-high-heat-capacity honeycomb fired body are thinner than cell walls other than the cell walls located in the outermost part of the center-high-heat-capacity honeycomb fired body.

As illustrated in Fig. 11, in the inner honeycomb fired body 410, the average thickness of the cell walls in the central part of the inner honeycomb fired body 410 is larger than the average thickness of the cell walls in the peripheral part of the inner honeycomb fired body 410.

Specifically, in the inner honeycomb fired body 410 illustrated in Fig. 11, the thickness of the cell walls 413a located in the outermost part of the inner honeycomb fired body 410 is smaller than the thickness of the cell walls 413b other than the cell walls 413a located in the outermost part of the inner honeycomb fired body 410. The  thickness of the cell walls 413b located in a part other than the cell walls 413a located in the outermost part of the inner honeycomb fired body 410 is constant.

Therefore, the inner honeycomb fired body 410 illustrated in Fig. 11 is a center-high-heat-capacity honeycomb fired body in which the heat capacity per unit volume in the central part of the honeycomb fired body is larger than the heat capacity per unit volume in the peripheral part of the honeycomb fired body.

As illustrated in Fig. 11, in the inner honeycomb fired body 410, each of the cells 411 has a quadrangle (square) shape in a cross section perpendicular to the longitudinal direction of the cells 411.

In the inner honeycomb fired body 410 illustrated in Fig. 11, each of the cells located in the outermost periphery of the honeycomb fired body is larger than each of the cells located in a part other than the outermost periphery of the honeycomb fired body.

In the honeycomb structured body according to the fourth embodiment of the present invention, as long as cell walls located in the outermost part of the center-high-heat-capacity honeycomb fired body are thinner than cell walls other than the cell walls located in the outermost part of the center-high-heat-capacity honeycomb fired body, the shape of the cell wall is not limited to the shape illustrated in Fig. 11.

In the honeycomb structured body according to the fourth embodiment of the present invention, the preferable average thickness of the cell walls in the central part of the center-high-heat-capacity honeycomb fired body and the preferable average thickness of the cell walls in the peripheral part of the center-high-heat-capacity honeycomb  fired body are the same as those of the first embodiment of the present invention.

Next, an outer honeycomb fired body in the honeycomb structured body according to the fourth embodiment of the present invention will be described.

As described in the first embodiment of the present invention, it is sufficient that the outer honeycomb fired body in the honeycomb structured body according to the fourth embodiment of the present invention has a cross-sectional shape excluding part of the inner honeycomb fired body in the honeycomb structured body according to the fourth embodiment of the present invention.

In the honeycomb structured body according to the fourth embodiment of the present invention, the preferable thickness of the peripheral wall in each of the honeycomb fired bodies (inner honeycomb fired bodies and outer honeycomb fired bodies) is the same as that of the first embodiment of the present invention.

In the honeycomb structured body according to the fourth embodiment of the present invention, the cross-sectional shapes of the cells provided in the inner honeycomb fired bodies and the outer honeycomb fired bodies may be all quadrangles (squares), or may be a shape made of large volume cells and small volume cells as in the second embodiment of the present invention.

Fig. 12 is a side view schematically illustrating another example of an inner honeycomb fired body in the honeycomb structured body of the fourth embodiment of the present invention.

In an inner honeycomb fired body 420 illustrated in Fig. 12, a large volume cell 421a and a small volume cell  421b are alternately provided. Each of the large volume cells 421a has an octagonal shape in a cross section, and each of the small volume cells 421b has a quadrangle (square) shape in a cross section. The thickness of the cell walls 423a located in the outermost part of the inner honeycomb fired body 420 is smaller than that of the cell walls 423b other than the cell walls 423a located in the outermost part of the inner honeycomb fired body 420.

In the method for manufacturing the honeycomb structured body according to the fourth embodiment of the present invention, a honeycomb structured body can be manufactured as in the first embodiment of the present invention, except that the shape of a die used for extrusion molding is changed and a honeycomb molded body having a predetermined shape is manufactured.

In the fourth embodiment of the present invention, not only the effects (1) to (3), and (5) described in the first embodiment of the present invention but also the following effects can be exerted.

(8) In the honeycomb structured body according to the present embodiment, cell walls located in the outermost part of the center-high-heat-capacity honeycomb fired body are thinner than cell walls other than the cell walls located in the outermost part of the center-high-heat-capacity honeycomb fired body.

Since the temperature difference in between the central part and the peripheral part of the center-high-heat-capacity honeycomb fired body can be more reduced even in the honeycomb structured body containing the center-high-heat-capacity honeycomb fired body having such a configuration, cracks can be prevented.

(Example)

Hereinafter, examples are given for more specifically describing the first to fourth embodiments of the present invention. However, the present invention is not limited only to these examples.

(Manufacture of honeycomb fired body)

First, honeycomb fired bodies 1 to 11 having different thicknesses of cell walls were manufactured.

(Manufacture of honeycomb fired body 1)

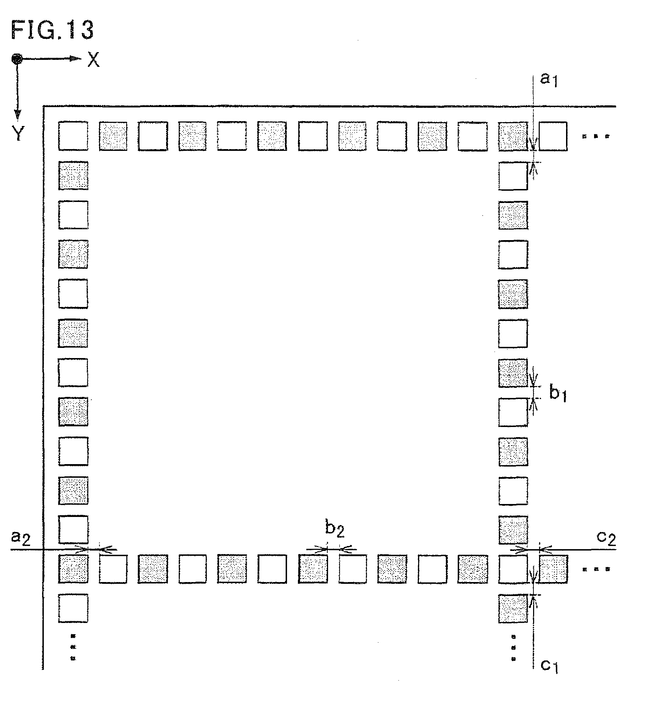

First, 54.6% by weight of a silicon carbide coarse powder having an average particle size of 22 $\mu$m and 23.4% by weight of a silicon carbide fine powder having an average particle size of 0.5 $\mu$m were mixed. To the resulting mixture, 4.3% by weight of an organic binder (methylcellulose), 2.6% by weight of a lubricant (UNILUB, manufactured by NOF Corporation), 1.2% by weight of glycerin, and 13.9% by weight of water were added, and then kneaded to prepare a wet mixture. The obtained wet mixture was extrusion-molded.
In this process, there was manufactured a raw honeycomb molded body having approximately the same shape as that of the inner honeycomb fired body 210 illustrated in Figs. 6(a) and 6(b) with cells not sealed.
Next, the raw honeycomb molded bodies were dried with a microwave drying apparatus to obtain dried honeycomb molded bodies. Predetermined cells of the dried honeycomb molded bodies were sealed by filling the cells with a plug material paste. The wet mixture was used as the plug material paste. Thereafter, the dried honeycomb molded bodies, which have predetermined cells filled with the plug material paste, were dried with a drying apparatus again.
Subsequently, the dried honeycomb molded bodies having cells sealed were degreased at 400°C, and then fired at 2200°C under normal pressure argon atmosphere for three hours.
In this manner, a honeycomb fired body was manufactured. The honeycomb fired body manufactured in the above processes was a honeycomb fired body 1.
The honeycomb fired body 1 includes a porous silicon carbide sintered body and has a porosity of 42%, an average pore size of 9 $\mu$m, a size of 34.3 mm $\times$ 34.3 mm $\times$ 200 mm, the number of cells (cell density) of 24 $\times$ 24 pcs/unit, and a thickness of the peripheral wall of 0.3 mm. The honeycomb fired body 1 has large volume cells and small volume cells, and the ratio of the area of each of the large volume cells in a cross section perpendicular to the longitudinal direction to the area of each of the small volume cells in a cross section perpendicular to the longitudinal direction is 1.55.
The thickness of the cell wall in the honeycomb fired body 1 was measured by the following method. Fig. 13 is a schematic view for explaining a method of measuring the thickness of a cell wall in a honeycomb fired body in each of the examples and comparative examples. In Fig. 13, the cross-sectional shapes of all the cells are fixed to be a quadrangle (square), and the thicknesses of all the cell walls are assumed to be constant in order to plainly describe a method for measuring the thickness of the cell walls. In addition, only some cells are described in Fig. 13. First, provided that one corner of the honeycomb fired body is set to be an original point and the peripheral wall in the honeycomb fired body is set to be an X-axis and a Y-axis in the manufactured honeycomb fired body, a two-dimensional orthogonal coordinate system in which the X-axis and the Y-axis intersects are mutually orthogonal is assumed. Here, the cells formed in the honeycomb fired body 1 are given coordinates of (X,Y) = (1, 1), (1, 2), ..., (1, 24), (2, 1), (2, 2), ..., (2, 24), (3, 1), ..., (11, 24), (12, 1), (12, 2), ..., (12, 24), (13, 1), ..., (23, 24), (24, 1) (24, 2) ... (24, 24).
Next, the thickness of each of the cell walls is measured with an optical microscope (produced by Nikon Corporation, measuring microscope MM-40) in the cell line located in X = 12 and Y = 12. Specifically, in the cell line located in X = 12, the thickness "$a_1$" of the cell wall between cells (12, 1) and (12, 2), the thickness "$b_1$" of the cell wall between cells (12, 7) and (12, 8), the thickness "$c_1$" of the cell wall between cells (12, 12) and (12, 13), the thickness "$d_1$" (not illustrated) of the cell wall between cells (12, 17) and (12, 18), and the thickness "$e_1$" (not illustrated) of the cell wall between cells (12, 23) and (12, 24) are measured. In the cell line located in Y = 12, the thickness "$a_2$" of the cell wall between cells (1, 12) and (2, 12), the thickness "$b_2$" of the cell wall between cells (7, 12) and (8, 12), the thickness "$c_2$" of the cell wall between cells (12, 12) and (13, 12), the thickness "$d_2$" (not illustrated) of the cell wall between cells (17, 12) and (18, 12), and the thickness "$e_2$" (not illustrated) of the cell wall between cells (23, 12) and (24, 12) are measured.
The average of "$a_1$" and "$a_2$", the average of "$b_1$" and "$b_2$", the average of "$c_1$" and "$c_2$", the average of "$d_1$" and "$d_2$", the average of "$e_1$" and "$e_2$" are obtained, and are "a", "b", "c", "d", and "e", respectively.
As a result, the cell walls in the honeycomb fired body 1 have thicknesses of a = 0.095 mm, b = 0.100 mm, c = 0.105 mm, d = 0.100 mm, and e = 0.095 mm.

(Manufacture of honeycomb fired bodies 2 to 11)

In the process of manufacturing the honeycomb fired body 1, the shape of a die used in the molding process was changed, and honeycomb fired bodies 2 to 11 having cell walls with different thikenesses were manufactured. Upon manufacturing honeycomb fired bodies 2 to 6, raw honeycomb molded bodies which had a shape similar to that of the inner honeycomb fired body 210 illustrated in Figs. 6(a) and 6(b) and whose cells were not sealed were manufactured.

Upon manufacturing a honeycomb fired body 7, a raw honeycomb molded body which had a shape similar to that of the inner honeycomb fired body 420 illustrated in Fig. 12 and whose cells were not sealed was manufactured.

Upon manufacturing honeycomb fired bodies 8 to 10, raw honeycomb molded bodies which had cell walls with a constant thickness and whose cells were not sealed were manufactured.

Upon manufacturing a honeycomb fired body 11, a raw honeycomb molded body which had an inverted shape of that of the inner honeycomb fired body 210 illustrated in Figs. 6(a) and 6(b) and whose cells were not sealed was manufactured. That is, a raw honeycomb molded body having a shape in which the thickness of the cell wall gradually increases from the central part to the peripheral part of the honeycomb fired body was manufactured.

The honeycomb fired bodies 2 to 11 include a porous silicon carbide sintered body and has a porosity of 42%, an average pore size of 9 $\mu$m, a size of 34.3 mm $\times$ 34.3 mm $\times$ 200 mm, the number of cells (cell density) of 24 $\times$ 24 pcs/unit, a thickness of the peripheral wall of 0.3 mm. Each of the honeycomb fired bodies 2 to 11 has large volume cells and small volume cells, and the ratio of the area of each of the large volume cells in a cross section perpendicular to the longitudinal direction to the area of each of the small volume cells in a cross section perpendicular to the longitudinal direction is 1.55.

The cell walls in the honeycomb fired body 2 have thicknesses of a = 0.143 mm, b = 0.150 mm, c = 0.157 mm, d = 0.150 mm, and e = 0.143 mm.

The cell walls in the honeycomb fired body 3 have thicknesses of a = 0.166 mm, b = 0.175 mm, c = 0.184 mm, d=0.175 mm, and e=0.166 mm.

The cell wall in the honeycomb fired body 4 have thicknesses of a = 0.170 mm, b = 0.175 mm, c = 0.180 mm, d = 0.175 mm, and e = 0.170 mm.

The cell wall in the honeycomb fired body 5 have thicknesses of a = 0.173 mm, b = 0.175 mm, c = 0.177 mm, d = 0.175 mm, and e = 0.173 mm.

The cell wall in the honeycomb fired body 6 have thicknesses of a = 0.190 mm, b = 0.200 mm, c = 0.210 mm, d = 0.200 mm, and e = 0.190 mm.

The cell wall in the honeycomb fired body 7 have thicknesses of a = 0.166 mm, b = 0.179 mm, c = 0.179 mm, d = 0.179 mm, and e = 0.166 mm.

The cell wall in the honeycomb fired body 8 have thicknesses of a = 0.100 mm, b = 0.100 mm, c = 0.100 mm, d = 0.100 mm, and e = 0.100 mm.

The cell wall in the honeycomb fired body 9 have thicknesses of a = 0.175 mm, b = 0.175 mm, c = 0.175 mm, d = 0.175 mm, and e = 0.175 mm.

The cell wall in the honeycomb fired body 10 have thicknesses of a = 0.200 mm, b = 0.200 mm, c = 0.200 mm, d = 0.200 mm, and e = 0.200 mm.

The cell wall in the honeycomb fired body 11 have thicknesses of a = 0.185 mm, b = 0.175 mm, c = 0.165 mm, d = 0.175 mm, and e = 0.185 mm.

(Manufacture of honeycomb structured body)

A honeycomb structured body was manufactured with each of the honeycomb fired bodies 1 to 11.

(Example 1)

An adhesive paste was applied to predetermined side faces of the honeycomb fired bodies 1, and 36 pieces (six pieces in length $\times$ six pieces in breadth) of the honeycomb fired bodies 1 were bonded to one another with the adhesive paste interposed therebetween. In this manner, an aggregate of the honeycomb fired bodies was manufactured. The aggregate of the honeycomb fired bodies was heated at 180°C for 20 minutes to dry and solidify the adhesive paste. In this manner, a rectangular pillar-shaped ceramic block having the adhesive layer of 1 mm in thickness was manufactured.

Here, as the adhesive paste, an adhesive paste having the following composition was used. The adhesive paste contains 30.0% by weight of silicon carbide particles having an average particle size of 0.6 $\mu$m, 21.4% by weight of silica sol (solids content: 30% by weight), 8.0% by weight of carboxymethyl cellulose, and 40.6% by weight of water.

Subsequently, the periphery of the rectangular pillar-shaped ceramic block was cut with a diamond cutter. In this manner, a round pillar-shaped ceramic block having a diameter of 198.5 mm was manufactured.

Next, a peripheral coating material paste was applied to the peripheral part of the round pillar-shaped ceramic block, and the peripheral coating material paste was heated and solidified at 120°C. In this manner, a peripheral coat layer was formed around the peripheral part of the ceramic block. Here, the adhesive paste was used as the peripheral coating material paste.

Through the above processes, a round pillar-shaped honeycomb structured body having a diameter of 200 mm × a length of 200 mm was manufactured.

(Examples 2 to 7)

Honeycomb structured bodies of Examples 2 to 7 were manufactured as in Example 1 by using each of the honeycomb fired bodies 2 to 7.

(Comparative Examples 1 to 4)

Honeycomb structured bodies of Comparative Examples 1 to 4 were manufactured as in Example 1 by using each of the honeycomb fired bodies 8 to 11.

(Durability test)

The honeycomb structured bodies manufactured in Examples 1 to 7 and Comparative Examples 1 to 4 were subjected to a durability test by the following method.

First, a holding sealing material was wound around each of the honeycomb structured bodies manufactured in Examples 1 to 7 and Comparative Examples 1 to 4. Then, the resulting honeycomb structured body was press-fitted into a cylindrical casing (metal shell) so that an exhaust gas purifying apparatus was manufactured. Here, the holding sealing material is mat-like and made of alumina-silica inorganic fibers, and has a thickness of 8 mm.

The end portion on the exhaust gas inlet side of the exhaust gas purifying apparatus was connected to an introduction pipe coupled to a 6.4-L diesel engine. Further, the end portion on the exhaust gas outlet side of the exhaust gas purifying apparatus was connected to an exhaust pipe coupled to the outside.

Subsequently, the engine was driven at the number of revolutions of 3000 min$^{-1}$ and a torque of 50 Nm so that exhaust gases from the engine were allowed to pass through the honeycomb structured body.

After the engine had been driven until the amount of PM captured per one liter of the honeycomb structured body reached the amount (amount of captured PM: 31 to 50 g/L) described in Table 1, PM was burned by post-injection.

A condition for the post injection was set such that a central temperature of the honeycomb structured body became almost constant at 600°C during one minute after the post injection was started. After the post injection, occurrence of cracks in the honeycomb structured body was visually observed.

In the column of "cracks" in Table 1, the case where cracks occurred in the honeycomb structured body after the post injection was represented as "present" while the case where no cracks occurred in the honeycomb structured body after the post injection was represented as "absent".

Table 1 summarizes the honeycomb fired bodies used, the thickness of the cell walls in the honeycomb fired bodies, and the results of the durability test in the honeycomb structured bodies according to Examples 1 to 7 and Comparative Examples 1 to 4.

| | Honeycomb fired body | Thickness of cell wall in honeycomb fired body (mm) | | | | | Durability test | |
| --- | --- | --- | --- | --- | --- | --- | --- | --- |
| | | a | b | c | d | e | Amount of captured PM (g/L) | Cracks |
| Example 1 | 1 | 0.095 | 0.100 | 0.105 | 0.100 | 0.095 | 31 | Absent |
| Example 2 | 2 | 0.143 | 0.150 | 0.157 | 0.150 | 0.143 | 41 | Absent |
| Example 3 | 3 | 0.166 | 0.175 | 0.184 | 0.175 | 0.166 | 44 | Absent |
| Example 4 | 4 | 0.170 | 0.175 | 0.180 | 0.175 | 0.170 | 44 | Absent |
| Example 5 | 5 | 0.173 | 0.175 | 0.177 | 0.175 | 0.173 | 44 | Absent |
| Example 6 | 6 | 0.190 | 0.200 | 0.210 | 0.200 | 0.190 | 50 | Absent |
| Example 7 | 7 | 0.166 | 0.179 | 0.179 | 0.179 | 0.166 | 44 | Absent |
| Comparative Example 1 | 8 | 0.100 | 0.100 | 0.100 | 0.100 | 0.100 | 31 | Present |

(continued)

| | Honeycomb fired body | Thickness of cell wall in honeycomb fired body (mm) | | | | | Durability test | |
| | | a | b | c | d | e | Amount of captured PM (g/L) | Cracks |
|---|---|---|---|---|---|---|---|---|
| Comparative Example 2 | 9 | 0.75 | 0.175 | 0.175 | 0.175 | 0.175 | 44 | Present |
| Comparative Example 3 | 10 | 0.200 | 0.200 | 0.200 | 0.200 | 0.200 | 50 | Present |
| Comparative Example 4 | 11 | 0.185 | 0.175 | 0.165 | 0.175 | 0.185 | 44 | Present |

As in Examples 1 to 7, when the thickness of the cell wall in the central part of the honeycomb fired body in the honeycomb structured body was larger than the thickness of the cell wall in the peripheral part of the honeycomb fired body, cracks did not occur in the honeycomb structured body after the post injection.
In contrast, when the thickness of the cell wall in the honeycomb structured body is constant as in Comparative Examples 1 to 3, and when the thickness of the cell wall in the central part of the honeycomb fired body in the honeycomb structured body was smaller than the thickness of the cell wall in the peripheral part of the honeycomb fired body as in Comparative Example 4, cracks occurred in the honeycomb structured body after the post injection.
As thus described, when the average thickness of the cell walls in the central part of the honeycomb fired body in the honeycomb structured body is larger than the average thickness of the cell walls in the peripheral part of the honeycomb fired body, cracks resulting from the temperature difference in between the central part and the peripheral part of the honeycomb fired body can be presumably prevented. It is because when the average thickness of the cell walls in the central part of the honeycomb fired body is larger than the average thickness of the cell walls in the peripheral part of the honeycomb fired body, the heat capacity per unit volume in the central part of the honeycomb fired body can be presumably larger than the heat capacity per unit volume in the peripheral part of the honeycomb fired body.

(Other embodiments)

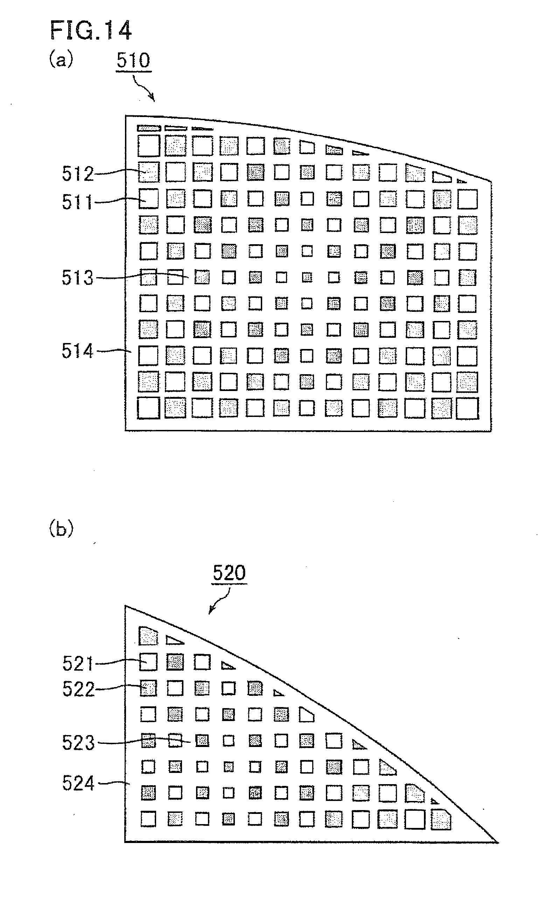

In the honeycomb structured bodies according to the first to fourth embodiments of the present invention, all of the honeycomb fired bodies not located in the periphery of the ceramic block (namely, inner honeycomb fired bodies) are the center-high-heat-capacity honeycomb fired bodies.
However, in the honeycomb structured body according to the embodiments of the present invention, it is sufficient that at least one of the multiple honeycomb fired bodies in the honeycomb structured body is a center-high-heat-capacity honeycomb fired body. The number and the position of the center-high-heat-capacity honeycomb fired bodies in the honeycomb structured body is not particularly limited.
Therefore, not the inner honeycomb fired bodies but the outer (honeycomb fired bodies may be center-high-heat-capacity honeycomb fired bodies in the honeycomb structured body.
In the honeycomb structured bodies according to the first to fourth embodiments of the present invention, the honeycomb fired bodies (namely, outer honeycomb fired bodies) located in the periphery of the ceramic block are not center-high-heat-capacity honeycomb fired bodies.
However, in the honeycomb structured body according to the embodiments of the present invention, all the honeycomb fired bodies in the honeycomb structured body may be center-high-heat-capacity honeycomb fired bodies.
Specifically, the honeycomb structured body according to the embodiments of the present invention may include inner honeycomb fired bodies 110 illustrated in Fig. 2(a), Fig. 2(b), and Fig. 4, outer honeycomb fired bodies 510 illustrated in Fig. 14(a), and outer honeycomb fired bodies 520 illustrated in Fig. 14(b).
Figs. 14(a) and 14(b) are side views each schematically illustrating one example of an outer honeycomb fired body in a honeycomb structured body of another embodiment of the present invention.
The outer honeycomb fired body 510 illustrated in Fig. 14(a) and the outer honeycomb fired body 520 illustrated in Fig. 14(b) are modifications of the outer honeycomb fired body 120 illustrated in Fig. 5(a) and the outer honeycomb fired body 130 illustrated in Fig. 5(b), respectively.
In the outer honeycomb fired body 510 illustrated in Fig. 14(a) and the outer honeycomb fired body 520 illustrated in Fig. 14(b), the thickness of a cell wall 513 or 523 gradually decreases from the central part to the peripheral part of the outer honeycomb fired bodies 510 and 520. Specifically, in the outer honeycomb fired body 510 illustrated in Fig. 14(a) and the outer honeycomb fired body 520 illustrated in Fig. 14(b), a cell located in the center of the cross section of the honeycomb fired body is the smallest, and the size of a cell increases as the distance gets farther from the center of the cross section of the honeycomb fired body.

In order to manufacture a honeycomb structured body having the above configuration, a honeycomb molded body may be prepared with a die that corresponds to the outer honeycomb fired body 510 illustrated in Fig. 14(a) and the outer honeycomb fired body 520 illustrated in Fig. 14(b).

In the honeycomb structured body according to the embodiments of the present invention, it is preferable to manufacture a honeycomb molded body with the same die in consideration of manufacture efficiency of the honeycomb structured body. Accordingly, the honeycomb structured body according to the embodiments of the present invention is preferably manufactured from a ceramic block in which multiple honeycomb fired bodies having the same cell structure are combined with one another.

In the inner honeycomb fired body, which is a center-high-heat-capacity honeycomb fired body, in the honeycomb structured bodies according to the first and second embodiments of the present invention, a cell located in the center of the cross section of the honeycomb fired body is the smallest, and the size of a cell increases as the distance gets farther from the center of the cross section of the honeycomb fired body.

However, in the honeycomb structured bodies according to the first and second embodiments of the present invention, it is sufficient that the thickness of the cell wall gradually decreases from the central part to the peripheral part of the center-high-heat-capacity honeycomb fired body. For example, the following cell structure (the shape and arrangement of cells) may be employed.

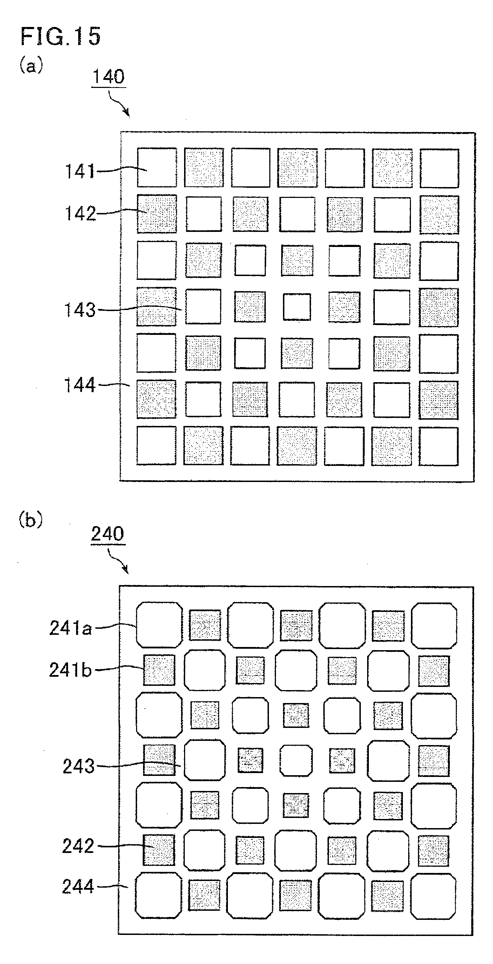

Fig. 15(a) is a side view schematically illustrating another example of an inner honeycomb fired body in the honeycomb structured body of the first embodiment of the present invention. Fig. 15(b) is a side view schematically illustrating another example of an inner honeycomb fired body in the honeycomb structured body of the second embodiment of the present invention.

An inner honeycomb fired body 140 illustrated in Fig. 15(a) is a modification of the inner honeycomb fired body 110 illustrated in Fig. 4, and an inner honeycomb fired body 240 illustrated in Fig. 15(b) is a modification of the inner honeycomb fired body 210 illustrated in Figs. 6(a) and 6(b).

In the inner honeycomb fired body 140 illustrated in Fig. 15(a) and the inner honeycomb fired body 240 illustrated in Fig. 15(b), a cell located in the center of the cross section of the honeycomb fired body is the smallest, and the size of cells increases as cell groups surrounding the smallest cell get farther from the smallest cell.

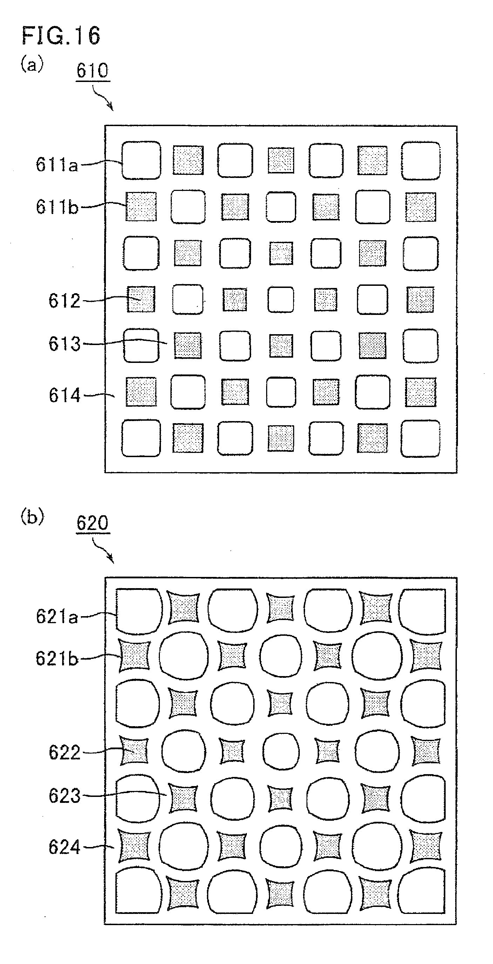

In the honeycomb fired body in the honeycomb structured body according to the embodiments of the present invention, when the large number of cells include large volume cells and small volume cells, the configurations of the large volume cells and small volume cells are not limited to the configurations described in the preceding embodiments. Figs. 16(a) and 16(b) are side views each schematically illustrating one example of an inner honeycomb fired body in a honeycomb structured body of another embodiment of the present invention.

Figs. 16(a) and 16(b) are each a side view seen from one end face of the inner honeycomb fired body, namely, the end face on the side where the small volume cells are sealed.

Other embodiments of the cross-sectional shapes of the large volume cell and the small volume cell are described with reference to Figs. 16(a) and 16(b).

In an inner honeycomb fired body 610 illustrated in Fig. 16(a), the shape of a large volume cell 611a in a cross section perpendicular to the longitudinal direction is a quadrangle in which portions corresponding to corner portions are arcs, and the shape of a small volume cell 611b in a cross section perpendicular to the longitudinal direction is a quadrangle.

The shape of the small volume cells 611b, as well as the large volume cells 611a, in a cross section perpendicular to the longitudinal direction may be a quadrangle in which portions corresponding to corner portions are arcs.

In an inner honeycomb fired body 620 illustrated in Fig. 16(b), large volume cells 621a and small volume cells 621b are cells whose cell walls 623 are formed by curve lines in a cross section perpendicular to the longitudinal direction. Namely, the cross-sectional shapes of cell walls 623 indicated by solid lines are formed by curve lines in Fig. 16(b).

The large volume cells 621a have cross-sectional shapes in which cell walls 623 project from the center toward the outside of the cell cross section. In contrast, the small volume cells 621b have cross-sectional shapes in which cell walls 623 project from the outside toward the center of the cross section of the cell.

The cell walls 623 have "wave" shapes undulating horizontally and vertically in a cross section of the inner honeycomb fired body. The tops of the waves of the adjacent cell walls 623 (maximum amplitude of sinusoid) in small volume cells are most proximate to each other so that the large volume cells 621a having a cross-sectional shape expanding outwardly and the small volume cells 621b recessing inwardly may be formed. The amplitude of the waves may or may not be constant. In particular, constant waves are preferable.

In the outer honeycomb fired body, the large volume cells and the small volume cells may have cross sections as illustrated in Fig 16(a) or 16(b). Also, the outer honeycomb fired body may have a cross-sectional shape excluding part of the inner honeycomb fired body illustrated in Figs. 16(a) or 16(b).

Thus, in the center-high-heat-capacity honeycomb fired bodies in the honeycomb structured body according to the embodiments of the present invention, cell structures (the shape and arrangement of cells) of various honeycomb fired bodies may be employed. That is, in the honeycomb structured bodies according to the embodiments of the present invention, as long as the average thickness of the cell walls in the central part of the center-high-heat-capacity honeycomb fired body is larger than the average thickness of the cell walls in the peripheral part of the center-high-heat-capacity honeycomb fired body, the shape of the cell wall and the cell structure are not particularly limited.

Therefore, the shape of the cell wall in the same center-high-heat-capacity honeycomb fired body may be a combination of the shape of the cell wall whose thickness gradually decreases from the central part to the peripheral part of the center-high-heat-capacity honeycomb fired body and the shape of the cell wall whose thickness continuously decreases from the central part to the peripheral part of the center-high-heat-capacity honeycomb fired body.

In addition, the shape of the cell wall in the same center-high-heat-capacity honeycomb fired body may be a combination of the shapes of the cell walls and cell structures described in aforementioned embodiments.

Further, though cells are formed in the center of the cross section of the honeycomb fired bodies described in aforementioned embodiments, cells may not be formed in the center of the cross section of the honeycomb fired bodies.

The honeycomb structured bodies each made of 32 pieces of honeycomb fired bodies were described as examples in the first to fourth embodiments of the present invention. The shape and the number of honeycomb fired bodies in the honeycomb structured body according to the embodiments of the present invention is not particularly limited.

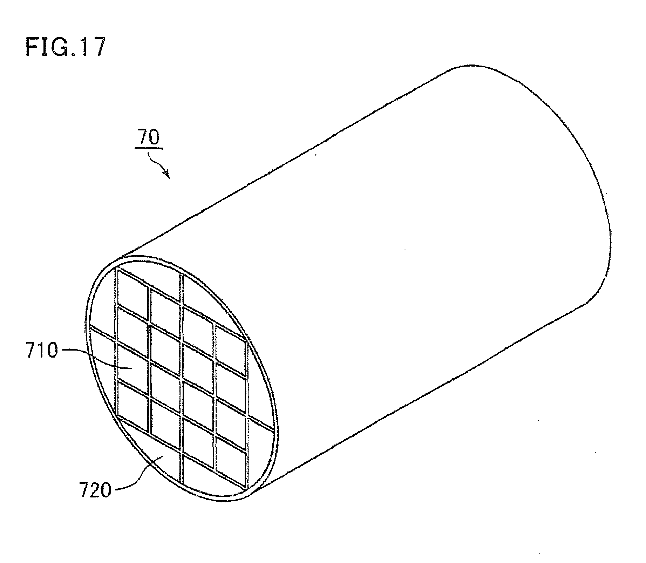

Fig. 17 is a perspective view schematically illustrating one example of a honeycomb structured body of another embodiment of the present invention.

A honeycomb structured body 70 illustrated in Fig. 17 is made of 16 pieces of inner honeycomb fired bodies 710 and 8 pieces of outer honeycomb fired bodies 720.

The honeycomb structured body 70 illustrated in Fig. 17 has the same configuration as that of the honeycomb structured body 10 illustrated in Figs. 1(a) and 1(b), except that an outer honeycomb fired body 720 has a different cross-sectional shape. The outer honeycomb fired body 720 illustrated in Fig. 17 has a cross-sectional shape surrounded by two line segments (long line segment and short line segment) and one arc. The angle formed by the two line segments is 90°.

The length of the long line segment of the outer honeycomb fired body 720 is not particularly limited, and is preferably a length corresponding to 2 pieces of the inner honeycomb fired bodies 710 (including the thickness of an adhesive layer). As the cell structures of the inner honeycomb fired bodies 710 and the outer honeycomb fired bodies 720 illustrated in Fig. 17, any cell structure described in the aforementioned embodiments may be employed.

Upon manufacturing a ceramic block in the honeycomb structured body according to the embodiments of the present invention, multiple kinds of honeycomb fired bodies having different cross-sectional shapes are manufactured, and a combination of the multiple kinds of honeycomb fired bodies leads to manufacture of a ceramic block in which multiple honeycomb fired bodies are combined with one another by interposing an adhesive layer. In this case, the periphery cutting process can be omitted.

In order to manufacture the honeycomb structured body 10 illustrated in Figs. 1(a) and 1(b), the following three kinds of honeycomb fired bodies having different cross-sectional shapes are manufactured. The first honeycomb fired body has a cross-sectional shape (quadrangle) surrounded by four straight lines. The second honeycomb fired body has a cross-sectional shape surrounded by two straight lines and one arc. The third honeycomb fired body has a cross-sectional shape surrounded by three straight lines and one arc. A round pillar-shaped ceramic block can be manufactured by combining 16 pieces of the first honeycomb fired bodies, 8 pieces of the second honeycomb fired bodies, and 8 pieces of the third honeycomb fired bodies.

Also, in order to manufacture the honeycomb structured body 70 illustrated in Fig. 17, the following two kinds of honeycomb fired bodies having different cross-sectional shapes are manufactured. The first honeycomb fired body has a cross-sectional shape (quadrangle) surrounded by four straight lines. The second honeycomb fired body has a cross-sectional shape surrounded by two straight lines and one arc. A round pillar-shaped ceramic block can be manufactured by combining 16 pieces of the first honeycomb fired bodies and 8 pieces of the second honeycomb fired bodies.

Here, each of the honeycomb fired bodies having different cross-sectional shapes can be manufactured by changing the shape of a die to be used in extrusion molding.

Examples of the combining process upon manufacturing the honeycomb structured body according to the embodiments of the present invention may include a method in which an adhesive paste is applied to a side face of each of the honeycomb fired bodies; a method in which each of the honeycomb fired bodies is temporally fixed in a molding frame having the same shape as the shape of a ceramic block (or an aggregate of honeycomb fired bodies) to be manufactured and an adhesive paste is injected into each gap between the honeycomb fired bodies; and the like.

The shape of the honeycomb structured body according to the embodiments of the present invention is not limited to a round pillar shape, and may be any pillar shape such as a cylindroid shape, a pillar shape with a racetrack end face, and a polygonal pillar shape.

In the honeycomb structured body according to the embodiments of the present invention, the end portion of the cells may not be sealed without a plug material provided in the cells. In this case, when a catalyst is supported on the cell walls, the honeycomb structured body functions as a catalyst supporting carrier for converting toxic gas components such as CO, NC, or NOx in exhaust gases.

In the honeycomb fired bodies in the honeycomb structured body according to the embodiments of the present invention, the thickness of the peripheral wall is the same as or larger than the thickness of the thickest cell wall. The thickness of the peripheral wall is preferably larger than the thickness of the thickest cell wall in terms of the strength of the honeycomb fired bodies.

In the case where the peripheral wall is thicker than the cell wall in the honeycomb fired body, the peripheral wall is preferably 1.3 to 3.0 times thicker than the thickest cell wall.

In the honeycomb structured body according to the embodiments of the present invention used as a filter, the porosity of the honeycomb fired body included in the honeycomb structured body is not particularly limited and is preferably in a range from 35% to 60%.

A porosity of the honeycomb fired body of less than 35% tends to cause clogging of the honeycomb fired body. In contrast, a porosity of the honeycomb fired body of more than 60% tends to lower the strength of the honeycomb fired body, leading to easy breakage of the honeycomb fired body.

In the honeycomb structured body according to the embodiments of the present invention used as a filter, the honeycomb fired body included in the honeycomb structured body preferably has an average pore size of 5 to 30 $\mu$m. An average pore size of the honeycomb fired body of less than 5 $\mu$m tends to cause clogging of the honeycomb fired body. In contrast, an average pore size of the honeycomb fired body of more than 30 $\mu$m allow particulates to pass through the pores of the honeycomb fired body. In such a case, the honeycomb fired body fails to capture particulates, and the honeycomb structured body may fail to function as a filter.

The porosity and the pore size can be measured by the conventionally known methods such as mercury porosimetry.

The cell density in a cross section perpendicular to the longitudinal direction of the honeycomb fired body in the honeycomb structured body according to the embodiments of the present invention is not particularly limited, and the lower limit thereof is preferably 31.0 pcs/cm$^2$ (200 pcs/inch$^2$) and the upper limit thereof is preferably 93.0 pcs/cm$^2$ (600 pcs/inch$^2$). The lower limit of the cell density is more preferably 38.8 pcs/cm$^2$ (250 pcs/inch$^2$) and the upper limit thereof is more preferably 77.5 pcs/cm$^2$ (500 pcs/inch$^2$) .

The thickness of the thickest cell wall in the honeycomb fired body included in the honeycomb structured body according to the embodiments of the present invention is not particularly limited, and is preferably 0.1 to 0.4 mm.

If the thickest cell wall has a thickness of less than 0.1 mm, the thickness of cell wall is too thin, and the strength of the honeycomb fired body cannot be maintained. In contrast, the thickest cell wall having a thickness of more than 0.4 mm tends to cause a rise in pressure loss of the honeycomb structured body.

In the honeycomb structured body according to the embodiments of the present invention, the shape of each cell in the honeycomb fired body in a cross section perpendicular to the longitudinal direction of the honeycomb fired body is not particularly limited, and may be any shape such as a circular shape, an elliptical shape, a quadrangle shape, a pentagonal shape, a hexagonal shape, a trapezoidal shape, and an octagonal shape. Or alternatively, various shapes of cells may be present in combination.

The main component of the material of the honeycomb fired body included in the honeycomb structured body according to the embodiments of the present invention is not limited to silicon carbide or silicon-bonded silicon carbide, and may be other ceramic materials. The other ceramic materials refer to ceramic powder including: ceramic nitrides such as aluminum nitride, silicon nitride, boron nitride, and titanium nitride; ceramic carbides such as zirconium carbide, titanium carbide, tantalum carbide, and tungsten carbide; and ceramic oxides such as cordierite and aluminium titanate. Among these, non-oxide ceramics are preferable and silicon carbide or silicon-bonded silicon carbide is particularly preferable because of its excellent heat resistance, mechanical strength, thermal conductivity, and the like.

The organic binder in the wet mixture used for manufacturing the honeycomb fired body included in the honeycomb structured body according to the embodiments of the present invention is not particularly limited. Examples thereof include methylcellulose, carboxy methylcellulose, hydroxy ethylcellulose, polyethylene glycol, and the like. Methylcellulose is preferable among these. A blending amount of the organic binder is usually preferably in a range from 1 to 10 parts by weight relative to 100 parts by weight of the ceramic powder.

The plasticizer in the wet mixture is not particularly limited, and examples thereof include glycerin and the like. The lubricant in the wet mixture is not particularly limited, and examples thereof include polyoxyalkylene-based compounds such as polyoxyethylene alkyl ether and polyoxypropylene alkyl ether.

Specific examples of the lubricant include polyoxyethylene monobutyl ether, polyoxypropylene monobutyl ether, and the like.

Moreover, the plasticizer and the lubricant may not be contained in the wet mixture in some cases.

In addition, a dispersant solution may be used upon preparing a wet mixture. Examples of the dispersant solution include water, an organic solvent such as benzene, alcohol such as methanol, and the like.

Furthermore, a molding aid may be added to the wet mixture.

The molding aid is not particularly limited, and examples thereof include ethylene glycol, dextrin, fatty acid, fatty acid soap, polyalcohol, and the like.

Furthermore, a pore-forming agent such as balloons that are fine hollow spheres including oxide-based ceramics, spherical acrylic particles, and graphite may be added to the wet mixture, if necessary. The balloons are not particularly limited, and examples thereof include alumina balloon, glass micro balloon, shirasu balloon, fly ash balloon (FA balloon), mullite balloon, and the like. Alumina balloon is desirable among these.

Examples of the inorganic binder in the adhesive paste and the peripheral coating material paste include silica sol, alumina sol, and the like. Each of these materials may be used alone, or two or more of these may be used in combination. Silica sol is preferable among the inorganic binders.

Example of the organic binder in the adhesive paste and the peripheral coating material paste include polyvinyl alcohol, methyl cellulose, ethyl cellulose, carboxymethyl cellulose, and the like. Each of these materials may be used alone, or two or more of these may be used in combination. Carboxymethyl cellulose is preferable among the organic binders.

Examples of the inorganic particles in the adhesive paste and the peripheral coating material paste include carbide particles, nitride particles, and the like. Specific examples thereof include inorganic particles made from silicon carbide, silicon nitride, boron nitride, and the like. Each of these may be used alone, or two or more of these may be used in combination. Among the inorganic particles, silicon carbide particles are preferable due to their superior thermal conductivity.

Examples of the inorganic fibers and/or whisker in the adhesive paste and the peripheral coating material paste include inorganic fibers and/or whisker made from silica-alumina, mullite, alumina, silica, and the like. Each of these may be used alone or two or more kinds of these may be used in combination. Alumina fibers are desirable among the inorganic fibers. The inorganic fibers may be biosoluble fibers.

Furthermore, a pore-forming agent such as balloons that are fine hollow spheres including oxide-based ceramics, spherical acrylic particles, and graphite may be added to the adhesive paste and the peripheral coating material paste, if necessary. The balloons are not particularly limited, and examples thereof include alumina balloon, glass micro balloon, shirasu balloon, fly ash balloon (FA balloon), mullite balloon, and the like. Alumina balloon is desirable among these.

A catalyst for purifying exhaust gases may be supported on the cell walls of the honeycomb fired body in the honeycomb structured body according to the embodiments of the present invention. Preferable examples of the catalyst include noble metals such as platinum, palladium, and rhodium. Other examples of the catalyst include alkali metals such as potassium and sodium, alkaline earth metals such as barium, and zeolite. Each of these catalysts may be used alone, or two or more of these may be used in combination.

The honeycomb structured body of the present invention includes an essential feature that at least one of the multiple honeycomb fired bodies is a center-high-heat-capacity honeycomb fired body in which the heat capacity per unit volume in the central part of the honeycomb fired body is larger than the heat capacity per unit volume in the peripheral part of the honeycomb fired body.

Desired effects can be exerted when such an essential feature is appropriately combined with various configurations described in detail in the first to fourth embodiments and other embodiments (for example, the shape of the honeycomb fired body in the honeycomb structured body, the shape of the cell wall in the honey comb fired body, the cell structure of the honeycomb fired body, and the process for manufacturing the honeycomb structured body).

EXPLANATION OF SYMBOLS

10, 70 Honeycomb structured body
11 Adhesive layer
13 Ceramic block
100, 110, 120, 130, 140, 210, 220, 230, 240, 310, 320, 330, 410, 420, 510, 520, 610, 620, 710, 720 Honeycomb fired body 111, 121, 131, 141, 211a, 211b, 221a, 221b, 231a, 231b, 241a, 241b, 311, 321, 331, 411, 421a, 421b, 511, 521, 611a, 611b, 621a, 621b Cell
113, 123, 133, 143, 213, 223, 233, 243, 313, 323, 333, 413a, 413b, 423a, 423b, 513, 523, 613, 623 Cell wall (cell wall in honeycomb fired body)
104, 114, 124, 134, 144, 214, 224, 234, 244, 314, 324, 334, 414, 424, 514, 524, 614, 624 Peripheral wall (peripheral wall in honeycomb fired body)
105 Central part of honeycomb fired body
106 Peripheral part of honeycomb fired body

**Claims**

1. A honeycomb structured body (10), comprising:

    a ceramic block (13) in which multiple honeycomb fired bodies (110) are combined with one another by interposing an adhesive layer (11), the honeycomb fired bodies having a peripheral wall (114) therearound and having a large number of cells (111) longitudinally disposed in parallel with one another with a cell wall (113) therebetween,
    wherein
    at least one of the multiple honeycomb fired bodies is a center-high-heat-capacity honeycomb fired body in which a heat capacity per unit volume in a central part (105) of the honeycomb fired body is larger than a heat capacity per unit volume in a peripheral part (106) of the honeycomb fired body, **characterized in that**
    the thickness of the peripheral wall (114) is the same as or larger than the thickness of the thickest cell wall (113).

2. The honeycomb structured body according to claim 1,
    wherein
    an average thickness of the cell walls (113) in the central part (105) of the center-high-heat-capacity honeycomb fired body is larger than an average thickness of the cell walls in the peripheral part (106) of the center-high-heat-capacity honeycomb fired body.

3. The honeycomb structured body according to claim 2,
    wherein
    the average thickness of the cell walls in the central part (105) of the center-high-heat-capacity honeycomb fired body is 0.10 to 0.20 mm, and
    the average thickness of the cell walls in the peripheral part (106) of the center-high-heat-capacity honeycomb fired body is 90 to 98% of the average thickness of the cell walls in the central part (105) of the center-high-heat-capacity honeycomb fired body.

4. The honeycomb structured body according to claim 2 or 3,
    wherein
    the thickness of the cell wall gradually decreases from the central part (105) to the peripheral part (106) of the center-high-heat-capacity honeycomb fired body.

5. The honeycomb structured body according to claim 2 or 3,
    wherein
    the thickness of the cell wall continuously decreases from the central part (105) to the peripheral part (106) of the center-high-heat-capacity honeycomb fired body.

6. The honeycomb structured body according to claim 2 or 3,
    wherein
    cell walls located in the outermost part of the center-high-heat-capacity honeycomb fired body are thinner than cell walls other than the cell walls located in the outermost part of the center-high-heat-capacity honeycomb fired body.

7. The honeycomb structured body according to any one of claims 1 to 6,
    wherein
    the thickness of the peripheral wall is 0.20 to 0.50 mm in each of the multiple honeycomb fired bodies.

8. The honeycomb structured body according to any one of claims 1 to 7,
    wherein
    in each of the multiple honeycomb fired bodies, the large number of cells include large volume cells and small volume cells, and
    each of the large volume cells is larger than each of the small volume cells in a cross section perpendicular to the longitudinal direction.

9. The honeycomb structured body according to claim 8,
    wherein
    each of the large volume cells has an octagonal shape in a cross section perpendicular to the longitudinal direction, and

each of the small volume cells has a quadrangle shape in a cross section perpendicular to the longitudinal direction.

10. The honeycomb structured body according to claim 8,
wherein
each of the large volume cells has a quadrangle shape in a cross section perpendicular to the longitudinal direction, and
each of the small volume cells has a quadrangle shape in a cross section perpendicular to the longitudinal direction.

11. The honeycomb structured body according to claim 8,
wherein
a cell wall to define each of the large volume cells and the small volume cells has a shape formed by a curve line in a cross section perpendicular to the longitudinal direction.

12. The honeycomb structured body according to any one of claims 8 to 11,
wherein
the ratio of the area of each of the large volume cells in a cross section perpendicular to the longitudinal direction to the area of each of the small volume cells in a cross section perpendicular to the longitudinal direction is 1.4 to 2.8.

13. The honeycomb structured body according to any one of claims 1 to 12,
wherein
all of the honeycomb fired bodies not located in the periphery of the ceramic block are the center-high-heat-capacity honeycomb fired bodies.

14. The honeycomb structured body according to any one of claims 1 to 12,
wherein
all of the multiple honeycomb fired bodies are the center-high-heat-capacity honeycomb fired bodies.

15. The honeycomb structured body according to any one of claims 1 to 14,
wherein
the large number of cells are alternately sealed at either end portions in each of the multiple honeycomb fired bodies.


**Patentansprüche**

1. Wabenstrukturkörper (10) mit:

einem Keramikblock (13), in dem mehrere gebrannte Wabenkörper (110) miteinander durch Zwischenfügen einer Klebeschicht (11) kombiniert sind, wobei die gebrannten Wabenkörper eine Randwand (114) dort herum aufweisen und eine große Anzahl an Zellen (111) aufweisen, die längs parallel zueinander mit einer Zellwand (113) dazwischen angeordnet sind, wobei
zumindest einer der mehreren gebrannten Wabenkörper ein gebrannter Zentralhochwärmekapazitäts-Wabenkörper ist, bei dem die Wärmekapazität pro Volumeneinheit in einem Zentralteil (105) des gebrannten Wabenkörpers größer als die Wärmekapazität pro Volumeneinheit in einem Randteil (106) des gebrannten Wabenkörpers ist, **dadurch gekennzeichnet, dass**
die Dicke der Randwand (114) die gleiche wie oder größer als die Dicke der dicksten Zellwand (113) ist.

2. Wabenstrukturkörper nach Anspruch 1, bei dem
die mittlere Dicke der Zellwände (113) in dem Zentralteil (105) des gebrannten Zentralhochwärmekapazitäts-Wabenkörpers größer als eine mittlere Dicke der Zellwände in dem Randteil (106) des gebrannten Zentralhochwärmekapazitäts-Wabenkörpers ist.

3. Wabenstrukturkörper nach Anspruch 2, bei dem die mittlere Dicke der Zellwände in dem Zentralteil (105) des gebrannten Zentralhochwärmekapazitäts-Wabenkörpers 0,01 bis 0,20 mm beträgt und
die mittlere Dicke der Zellwände in dem Randteil (106) des gebrannten Zentralhochwärmekapazitäts-Wabenkörpers 90 bis 98 % der mittleren Dicke der Zellwände in dem Zentralteil (105) gebrannten Zentralhochwärmekapazitäts-Wabenkörpers beträgt.

4. Wabenstrukturkörper nach Anspruch 2 oder 3, bei dem

die Dicke der Zellwand fortschreitend von dem Zentralteil (105) zu dem Randteil (106) des gebrannten Zentralhochwärmekapazitäts-Wabenkörpers abnimmt.

5. Wabenstrukturkörper nach Anspruch 2 oder 3, bei dem
die Dicke der Zellwand von dem Zentralteil (105) zu dem Randteil (106) des gebrannten Zentralhochwärmekapazitäts-Wabenkörpers kontinuierlich abnimmt.

6. Wabenstrukturkörper nach Anspruch 2 oder 3, bei dem
Zellwände, die in dem äußersten Teil des gebrannten Zentralhochwärmekapazitäts-Wabenkörpers angeordnet sind, dünner als Zellwände sind, die andere als die Zellwände sind, die in dem äußersten Teil des gebrannten Zentralhochwärmekapazitäts-Wabenkörpers angeordnet sind.

7. Wabenstrukturkörper nach einem der Ansprüche 1 bis 6, bei dem
die Dicke der Randwand in jedem der mehreren gebrannten Wabenkörper 0,20 bis 0,50 mm beträgt.

8. Wabenstrukturkörper nach einem der Ansprüche 1 bis 7, bei dem
in jedem der mehreren gebrannten Wabenkörper die große Anzahl an Zellen großvolumige Zellen und kleinvolumige Zellen aufweist und
jede der großvolumigen Zellen größer als jede der kleinvolumigen Zellen in einem Querschnitt senkrecht zu der Längsrichtung ist.

9. Wabenstrukturkörper nach Anspruch 8, bei dem
jede der großvolumigen Zellen eine achteckige Form in einem Querschnitt senkrecht zu der Längsrichtung aufweist und
jede der kleinvolumigen Zellen eine viereckige Form in einem Querschnitt senkrecht zu der Längsrichtung aufweist.

10. Wabenstrukturkörper nach Anspruch 8, bei dem
jede der großvolumigen Zellen eine viereckige Form in einem Querschnitt senkrecht zu der Längsrichtung aufweist und
jede der kleinvolumigen Zellen eine viereckige Form in einem Querschnitt senkrecht zu der Längsrichtung aufweist.

11. Wabenstrukturkörper nach Anspruch 8, bei dem
eine Zellwand zum Definieren jeder der großvolumigen Zellen und der kleinvolumigen Zellen eine Form aufweist, die durch eine Kurvenlinie in einem Querschnitt senkrecht zu der Längsrichtung ausgebildet ist.

12. Wabenstrukturkörper nach einem der Ansprüche 8 bis 11, bei dem
das Verhältnis der Fläche jeder der großvolumigen Zellen in einem Querschnitt senkrecht zu der Längsrichtung zu der Fläche jeder der kleinvolumigen Zellen in einem Querschnitt senkrecht zu der Längsrichtung 1,4 bis 2,8 beträgt.

13. Wabenstrukturkörper nach einem der Ansprüche 1 bis 12, bei dem
alle gebrannten Wabenkörper, die nicht in dem Rand des Keramikblocks angeordnet sind, gebrannte Zentralhochwärmekapazitäts-Wabenkörper sind.

14. Wabenstrukturkörper nach einem der Ansprüche 1 bis 12, bei dem
alle mehreren gebrannten Wabenkörper die gebrannten Zentralhochwärmekapazitäts-Wabenkörper sind.

15. Wabenstrukturkörper nach einem der Ansprüche 1 bis 14, bei dem
die große Anzahl an Zellen abwechselnd an dem einen oder dem anderen Endabschnitt in jedem der mehreren gebrannten Wabenkörper verschlossen sind.

**Revendications**

1. Corps structuré en nid d'abeille (10), comprenant :

un bloc en céramique (13) dans lequel de multiples corps cuits en nid d'abeille (110) sont combinés les uns avec les autres en ayant une couche adhésive (11) interposée entre eux, les corps cuits en nid d'abeille ayant une paroi périphérique (114) qui les entoure ainsi qu'un grand nombre de cellules (111) qui sont disposées

**EP 2 505 247 B1**

longitudinalement en parallèle les unes avec les autres en ayant une paroi cellulaire (113) entre elles, dans lequel

au moins l'un des multiples corps cuits en nid d'abeille est un corps cuit en nid d'abeille de haute capacité thermique au centre dans lequel une capacité thermique par unité de volume dans une partie centrale (105) du corps cuit en nid d'abeille est supérieure à une capacité thermique par unité de volume dans une partie périphérique (106) du corps cuit en nid d'abeille, **caractérisé en ce que**

l'épaisseur de la paroi périphérique (114) est supérieure ou égale à l'épaisseur de la paroi cellulaire la plus épaisse (113).

2.  Corps structuré en nid d'abeille selon la revendication 1,
    dans lequel
    une épaisseur moyenne des parois cellulaires (113) dans la partie centrale (105) du corps cuit en nid d'abeille de haute capacité thermique au centre est supérieure à une épaisseur moyenne des parois cellulaires dans la partie périphérique (106) du corps cuit en nid d'abeille de haute capacité thermique au centre.

3.  Corps structuré en nid d'abeille selon la revendication 2,
    dans lequel
    l'épaisseur moyenne des parois cellulaires dans la partie centrale (105) du corps cuit en nid d'abeille de haute capacité thermique au centre est de 0,10 à 0,20mm, et
    l'épaisseur moyenne des parois cellulaires dans la partie périphérique (106) du corps cuit en nid d'abeille de haute capacité thermique au centre est de 90 à 98% de l'épaisseur moyenne des parois cellulaires dans la partie centrale (105) du corps cuit en nid d'abeille de haute capacité thermique au centre.

4.  Corps structuré en nid d'abeille selon la revendication 2 ou 3,
    dans lequel
    l'épaisseur de la paroi cellulaire diminue de façon graduelle de la partie centrale (105) à la partie périphérique (106) du corps cuit en nid d'abeille de haute capacité thermique au centre.

5.  Corps structuré en nid d'abeille selon la revendication 2 ou 3,
    dans lequel
    l'épaisseur de la paroi cellulaire diminue de façon continue de la partie centrale (105) à la partie périphérique (106) du corps cuit en nid d'abeille de haute capacité thermique au centre.

6.  Corps structuré en nid d'abeille selon la revendication 2 ou 3,
    dans lequel
    les parois cellulaires situées dans la partie la plus externe du corps cuit en nid d'abeille de haute capacité thermique au centre sont plus minces que les parois cellulaires autres que les parois cellulaires situées dans la partie la plus externe du corps cuit en nid d'abeille de haute capacité thermique au centre.

7.  Corps structuré en nid d'abeille selon l'une quelconque des revendications 1 à 6,
    dans lequel
    l'épaisseur de la paroi périphérique est de 0,20 à 0,50mm dans chacun des multiples corps cuits en nid d'abeille.

8.  Corps structuré en nid d'abeille selon l'une quelconque des revendications 1 à 7,
    dans lequel
    dans chacun des multiples corps cuits en nid d'abeille, le grand nombre de cellules comportent des cellules de grand volume et des cellules de petit volume, et
    chacune des cellules de grand volume est plus grande que chacune des cellules de petit volume en coupe transversale perpendiculaire à la direction longitudinale.

9.  Corps structuré en nid d'abeille selon la revendication 8,
    dans lequel
    chacune des cellules de grand volume a une forme octogonale en coupe transversale perpendiculaire à la direction longitudinale, et
    chacune des cellules de petit volume a une forme quadrangulaire en coupe transversale perpendiculaire à la direction longitudinale.

10. Corps structuré en nid d'abeille selon la revendication 8,

29

dans lequel

chacune des cellules de grand volume a une forme quadrangulaire en coupe transversale perpendiculaire à la direction longitudinale, et

chacune des cellules de petit volume a une forme quadrangulaire en coupe transversale perpendiculaire à la direction longitudinale.

11. Corps structuré en nid d'abeille selon la revendication 8,

dans lequel

une paroi cellulaire devant définir chacune des cellules de grand volume et des cellules de petit volume a une forme façonnée par une ligne courbe en coupe transversale perpendiculaire à la direction longitudinale.

12. Corps structuré en nid d'abeille selon l'une quelconque des revendications 8 à 11,

dans lequel

le rapport de la zone de chacune des cellules de grand volume en coupe transversale perpendiculaire à la direction longitudinale par la zone de chacune des cellules de petit volume en coupe transversale perpendiculaire à la direction longitudinale est de 1,4 à 2,8.

13. Corps structuré en nid d'abeille selon l'une quelconque des revendications 1 à 12,

dans lequel

tous les corps cuits en nid d'abeille qui ne se trouvant pas dans la périphérie du bloc en céramique sont les corps cuits en nid d'abeille de haute capacité thermique au centre.

14. Corps structuré en nid d'abeille selon l'une quelconque des revendications 1 à 12,

dans lequel

l'ensemble des multiples corps cuits en nid d'abeille sont les corps cuits en nid d'abeille de haute capacité thermique au centre.

15. Corps structuré en nid d'abeille selon l'une quelconque des revendications 1 à 14,

dans lequel

le grand nombre de cellules sont étanches de manière alternée au niveau des deux parties d'extrémité dans chacun des multiples corps cuits en nid d'abeille.

## FIG.1

(a)

(b)

A-A line cross-sectional view

# FIG.2

(a)

(b)

B-B line cross-sectional view

## FIG.3

<u>100</u>

## FIG.4

<u>110</u>

# FIG.5

(a)  <u>120</u>

(b)

<u>130</u>

## FIG.6

(a)

(b)

FIG.7

220

221a

221b

223

224

FIG.8

230

231a

231b

233

234

FIG.9

310

311

312

313

314

# FIG.10

(a)

320

321
322
323
324

(b)

330

331
332
333
334

FIG.11

410

411
412
413a
413b
414

FIG.12

420

421a
421b
423a
423b
424

## FIG.13

# FIG.14

(a)    510

(b)

520

# FIG.15

(a)

<u>140</u>

141

142

143

144

(b)

<u>240</u>

241a

241b

243

242

244

FIG.16

(a) <u>610</u>

611a

611b

612

613

614

(b) <u>620</u>

621a

621b

622

623

624

FIG.17

70

710

720

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003010616 A
- EP 1484483 A1
- US 20050235622 A1
- EP 1618941 A1